# EUROPEAN PATENT SPECIFICATION

(11) **EP 4 396 934 B1**
(45) Date of publication and mention of the grant of the patent: **06.08.2025**
(21) Application number: 22776877.7
(22) Date of filing: 01.09.2022
(51) Int. Cl.: H02M 7/483, H02M 7/487

(54) **FLYING CAPACITOR CONVERTER WITH VOLTAGE BALANCING CIRCUIT**
FLIEGENDER KONDENSATORWANDLER MIT SPANNUNGSAUSGLEICHSSCHALTUNG
CONVERTISSEUR DE CONDENSATEUR VOLANT AVEC CIRCUIT D'ÉQUILIBRAGE DE TENSION

(30) Priority: 02.09.2021 NL 2029114
(43) Date of publication of application: 10.07.2024
(73) Proprietor: Prodrive Technologies Innovation Services B.V., 5692 EM Son en Breugel (NL)
(72) Inventor: EVERTS, Jordi, 5692 EM Son en Breugel (NL); VAN STRAALEN, Joost Johan, 5692 EM Son en Breugel (NL)
(74) Representative: IP Maison
(86) International application number: PCT/EP2022/074365
(87) International publication number: WO 2023/031346

(56) References cited:
- EP-A1- 2 525 484
- CN-A- 101 860 206
- US-A1- 2015 333 522
- US-A1- 2018 309 383
- MUNIZ JOAO H G ET AL: "A new five-level half-bridge based on a hybrid active neutral point clamped/flying dc-source inverter", 2015 IEEE ENERGY CONVERSION CONGRESS AND EXPOSITION (ECCE), IEEE, 20 September 2015 (2015-09-20), pages 3601 - 3606, XP032801058, DOI: 10.1109/ECCE.2015.7310169

## Description

### Technical field

The present invention is related to an electrical converter comprising a flying capacitor circuit, wherein the converter comprises a voltage balancing circuit for balancing a voltage of the one or more flying capacitors of the flying capacitor circuit.

### Background art

Multi-level Flying Capacitor Converters (FCCs) can be used in many applications, including DC-AC drives for electric motors, DC-AC amplifiers for powering loads that require high precision voltage and/or current regulation, such as gradient coils of MRI (Magnetic Resonance Imaging) scanners and linear motors of lithography machines, DC-DC interfaces for photo-voltaic installations, etc. They offer an attractive alternative to conventional two-level converter topologies, particularly in high-voltage applications, due to the higher number of voltage levels which enables the use of semiconductor switches with lower voltage rating which are generally cheaper and have relatively higher performance (i.e., they are more efficient) compared to switches with high voltage rating. Moreover, the higher number of voltage levels results in an increased effective switching frequency leading to smaller, cheaper (passive) output filters and increased control bandwidth of the output voltage and/or current. Compared to other multi-level converters the FCC offers additional advantages, i.e., due to the employment of a single DC source no isolated voltage sources are required as is the case for the cascaded H-bridge converters and no high-power clamping diodes, which are oftentimes accompanied with anti-parallel synchronously operated semiconductor switches, like in the Neutral Point Clamped (NPC) topologies. Moreover, FCCs can operate in bidirectional DC/DC, AC/DC, and DC/AC mode and can easily be paralleled to support high output current and output power levels which makes them particularly suitable for the use of new fast-switching Silicon Carbide (SiC) MOSFETs and Gallium Nitride (GaN) FETs which cannot be easily paralleled due to the need for ultra-precise gate-drive timing to avoid unequal current distribution and excessive switching losses. Lastly, interleaving of paralleled FCC stages enables an even higher effective switching frequency and a modular (scalable) design.

One drawback of FCCs is that balancing of the Flying Capacitor (FC) voltages is required in practice to avoid large increases of the harmonics in the output voltage as well as over-voltages across the semiconductor switches, which is especially challenging when (i) powering high-dynamic loads that cause large unequal steps in the duty cycles of the different switching cells within an FCC stage and are therefore a driving force for the imbalance of the FC voltages, (ii) powering loads that require arbitrary output voltage or current waveforms, particularly output current waveforms having large intervals with low current value that does not allow to perform active balancing of the FCs based on compensation of the Pulse-Width Modulated drive signals of the switches and (iii) connecting the FCC to a DC bus (DC source) with dynamically changing DC-bus voltage. The latter is the case when, for example, multiple FCCs or loads are connected to the same DC-bus requiring the FC voltages to 'follow' the DC-bus voltage change to keep the desired voltage ratio constant. Since the performance and reliability (related to over-voltages of the semiconductor switches) depend on the balancing of the individual FC voltages, FCCs are seldom employed in industry applications, despite the many advantages.

Modulation-inherent natural/passive FC balancing techniques are known, which rely on the natural balancing of the FC voltages resulting from the applied PWM modulation of the semiconductor switches in normal operation of the FCC and the currents correspondingly flowing in the converter. However, as has been extensively described in literature, these 'self-balancing' methods cannot guarantee balancing of the FC voltages in many practical applications and especially for the cases outlined above, since, *inter alia,* switching cells have to operate at the same duty cycle, the semiconductor switches must have the same characteristics, and the load current needs to be symmetrical and non-zero. Especially the constraint related to the symmetrical and non-zero load current is a major issue for loads requiring arbitrary output voltage and current waveforms such as for example the gradient coils of an MRI scanner or linear motors of lithography machines. On the other hand, modulation-inherent natural/passive FC balancing might be sufficiently effective in non-dynamic AC motor-drive applications where the output currents are sinusoidal and steady.

As opposed to the modulation-inherent FC balancing techniques, methods for achieving modulation-influencing active FC balancing operation using active (controlled) techniques that influence the converter modulation are known from:
M. Khazraei, H. Sepahvand, K. Corzine, and M. Ferdowsi, "A Generalized Capacitor Voltage Balancing Scheme for Flying Capacitor Multilevel Converters," in Proceedings of the IEEE Applied Power Electronics Conference and Exposition (APEC 2010), pp. 58-62;
C. Feng, J. Liang, and V. G. Agelidis, "Modified Phase-Shifted PWM Control for Flying Capacitor Multilevel Converters," IEEE Transactions on Power Electronics, vol. 22, no. 1, pp. 178-185, 2007;
B. P. McGrath, G. Gateau, T. Meynard, and D. G. Holmes, "Optimal Modulation of Flying Capacitor and Stacked Multicell Converters Using a State Machine Decoder," in Proceedings of the IEEE Power Electronics Specialists Conference (PESC 2005), pp. 1671- 1677; and
Muniz Joao H- G. et al: "A new five-level half-bridge based on a hybrid active neutral point clamped/ flying dc-source inverter", 2015 IEEE Energy Conversion Congress and Exposition, 20 September 2015, pages 3601-3606, XP032801058.

Even though these active balancing methods improve the balancing performance, the controlled change of the voltage of the FCs is heavily dependent on the amplitude of the load current meaning that adequate balancing is still impossible during time intervals when the load draws zero or quasi-zero current at the output of the FCC. Especially when the voltage of the DC-bus (DC source) is changing during such zero-load-current interval, e.g., when other loads connected to the same DC-bus are draining the DC-bus capacitors, the FC voltages cannot be actively controlled to follow the resulting DC-bus voltage change. A typical example of an application where such conditions exist is a gradient amplifier that powers the three gradient coils of an MRI scanner. It is a common situation that two of the three gradient coils are provided with maximum power and are draining the DC-bus capacitors while the current in the third gradient coils is zero for a certain interval. The FC voltages of the FCC that is driving this third coil cannot be adequately balanced in this situation. Moreover, so called intermediate modulation regions on an FCC exist in which redundant switching states of the topology are not effectively utilized. Adequate modulation-influencing active FC balancing is not possible in such intermediate regions.

To further improve balancing and to cope with all critical operating conditions of the aforementioned methods, including zero or quasi-zero output current or intermediate modulation regions, it is known to utilize additional (dissipative) passive components, so-called balance boosters (BBs). In Panteleimon Papamanolis, Dominik Neumayr, and Johann W. Kolar, "Behavior of the Flying Capacitor Converter Under Critical Operating Conditions", Proceedings of the 26th IEEE International Symposium on Industrial Electronics (ISIE 2017), Edinburgh, Scotland, June 19-21, 2017, these balance boosters are classified in internal and external boosters. Common for all balance boosters, is that a dissipative element (resistor and/or Zener diode) is used to draw the active power required to balance the FCs. This an important disadvantage due to the high losses which requires large and expensive components and additional heat extraction hardware, especially in high-power applications where large FCs need to be selected to deal with the high output currents and in highly dynamic applications where intensive repetitive balancing of the FC voltages takes place. Furthermore, balance boosters which include capacitors are increasing the effective capacitance parallel to the main semiconductor switches of the FCC, thus increasing the switching losses. In addition, balance boosters including capacitors operate only during a transient and are ineffective during converter standby or when modulation indices are close to the limits (i.e., duty-cycles close to 0 or to 1).

### Summary

There is therefore a need in the art to provide (multi-level) FC circuits with an improved voltage balancing circuit which overcomes the drawbacks of the prior art. It is a further object of the present disclosure to provide non-dissipative voltage balancing circuits capable of balancing the FC voltages of an FCC in a quasi-lossless manner. In particular, the non-dissipative balance boosters are configured to exchange energy between the FCs themselves and/or between the FCs and a voltage source, such as the DC-bus voltage source (e.g. capacitors).

According to a first aspect of the invention, there is therefore provided an electrical converter comprising a flying capacitor circuit as set out in the appended claim 1.

By providing the balancing circuit according to the present disclosure, it is possible to charge and to discharge the flying capacitors by transferring energy in a non-dissipative manner, hence obtaining a nearly lossless voltage balancing of the flying capacitors. Therefore, the balancing circuits of the present disclosure advantageously do not need or comprise dissipative elements. Additionally, it was observed through simulations described further herein, that the balancing circuits according to the present disclosure allow for obtaining such capacitor voltage balancing with low balancing currents, hence allowing utilizing semiconductor switching devices with low current ratings. Moreover, it was observed that with the balancing circuits of the present disclosure, the flying capacitor converters can obtain a voltage at the switch node (output) with very low harmonic content of the main switching frequency.

The above advantages are particularly evident when the balancing circuit comprises active switching devices which are operated to discharge the at least one flying capacitor by connecting the at least one flying capacitor in parallel with the voltage source. A time differentiation logic is implemented, which shifts the turn-ON and/or turn-OFF instants of the active switching devices compared to synchronous operation with a respective one of the plurality of first switching devices. By so doing, balancing performance can be optimised in terms of speed of balancing and/or control of balancing currents, particularly to avoid large current spikes and saturation of the balancing inductor. This time differentiation logic is configured to delay turn-ON of the actively operated switching device with respect to a turn-ON instant of the respective one of the plurality of first switching devices and/or to reduce an ON-time of the actively operated switching device compared to an on-time of the respective one of the plurality of first switching devices. The turn-ON delay and/or the ON-time can be adapted based on the duty cycle of the respective one of the plurality of first switching devices and/or based on the output current of the converter.

Advantageously, the electrical converter comprises a control unit and at least one voltage measurement device coupled to the control unit and configured to sense a voltage across the at least one flying capacitor and/or the voltage source. The control unit is configured to generate pulse width modulation control signals for operating the plurality of first switching devices and further comprises control logic configured to generate control signals, which can be pulse width modulated signals, or be derived therefrom. These control signals are configured to operate the actively operated switching device to discharge the at least one flying capacitor based on the pulse width modulation control signal of a respective one of the plurality of first switching devices and on the sensed voltage by connecting the at least one flying capacitor in parallel with the voltage source or in parallel with another capacitor of the at least one flying capacitor. The control logic is advantageously configured to implement a voltage offset triggering operation of the actively operated switching device in discharge mode and/or to adjust an ON-time of the actively operated switching device compared to synchronous operation with the respective one of the plurality of first switching devices, e.g. by implementing a time differentiation logic, e.g. delay turn-ON of the actively operated switching device with respect to a turn-ON instant of the respective one of the plurality of first switching devices and/or to reduce an ON-time of the actively operated switching device compared to an on-time of the respective one of the plurality of first switching devices. The turn-ON delay and/or the ON-time are advantageously adjusted based on the sensed voltage to optimise balancing performance in terms of speed of balancing and/or control of balancing currents, particularly to avoid large current spikes and saturation of the balancing inductor.

According to a second aspect of the invention, there is provided an amplifier system as set out in the appended claim 13.

There are described methods of balancing a voltage of a flying capacitor, such as a flying capacitor comprised in electrical converters of the present disclosure.

### Brief description of the figures

Aspects of the invention will now be described in more detail with reference to the appended drawings, wherein same reference numerals illustrate same features and wherein:
Figure 1 represents a three-level flying capacitor converter (FCC);
Figure 2 represents the three-level FCC of Fig. 1 further comprising a non-dissipative voltage balancing circuit not according to the claimed invention;
Figure 3 represents a current path provided by the non-dissipative voltage balancing circuit of Fig. 2 for charging a flying capacitor of the FCC;
Figure 4 represents the three-level FCC of Fig. 1 further comprising a non-dissipative voltage balancing circuit not according to the claimed invention;
Figure 5 represents a current path provided by the non-dissipative voltage balancing circuit of Fig. 4 for charging a flying capacitor of the FCC;
Figure 6 represents the three-level FCC of Fig. 1 further comprising a non-dissipative voltage balancing circuit not according to the claimed invention;
Figure 7 represents a four-level FCC;
Figure 8 represents the four-level FCC of Fig. 7 further comprising a non-dissipative voltage balancing circuit not according to the claimed invention;
Figure 9 represents a first current path provided by the non-dissipative voltage balancing circuit of Fig. 8 for charging a flying capacitor of the FCC;
Figure 10 represents a second current path provided by the non-dissipative voltage balancing circuit of Fig. 8 for charging the same flying capacitor of the FCC as Fig. 9;
Figure 11 represents a first current path provided by the non-dissipative voltage balancing circuit of Fig. 8 for charging another flying capacitor of the FCC;
Figure 12 represents a second current path provided by the non-dissipative voltage balancing circuit of Fig. 8 for charging the same flying capacitor of the FCC as Fig. 11;
Figure 13 represents the four-level FCC of Fig. 7 further comprising another implementation of the non-dissipative voltage balancing circuit not according to the claimed invention;
Figure 14 represents the three-level FCC of Fig. 1 further comprising an active non-dissipative voltage balancing circuit for charging and discharging the flying capacitor, according to an embodiment of the present disclosure;
Figure 15 represents a control logic for generating control signals of a switch of the voltage balancing circuit of Fig. 14;
Figure 16 represents the three-level FCC of Fig. 1 further comprising an active non-dissipative voltage balancing circuit for charging and discharging the flying capacitor according to another embodiment of the present disclosure;
Figure 17 represents the four-level FCC as in Fig. 13 further comprising an active non-dissipative voltage balancing circuit for charging and discharging the flying capacitors according to an embodiment of the present disclosure;
Figure 18 represents the four-level FCC as in Fig. 7 further comprising an active non-dissipative voltage balancing circuit for charging and discharging the flying capacitors according to another embodiment of the present disclosure;
Figure 19 represents a power supply for the three-level FCC of Fig. 1, comprising a three-output galvanically isolated DC/DC converter;
Figure 20 represents another power supply for the thee-level FCC of Fig. 1, comprising two galvanically isolated DC/DC converters having series connected outputs;
Figure 21 represents a power supply for the four-level FCC of Fig. 7, comprising three galvanically isolated DC/DC converters having series connected outputs;
Figure 22 represents an amplifier system for driving a load, wherein the amplifier system comprises a stack of three-level FCCs as described herein;
Figure 23 represents an amplifier system for driving a load, wherein the amplifier system comprises a stack of four-level FCCs as described herein;
Figure 24 represents voltage and current conventions for semiconductor switches and capacitors as described herein;

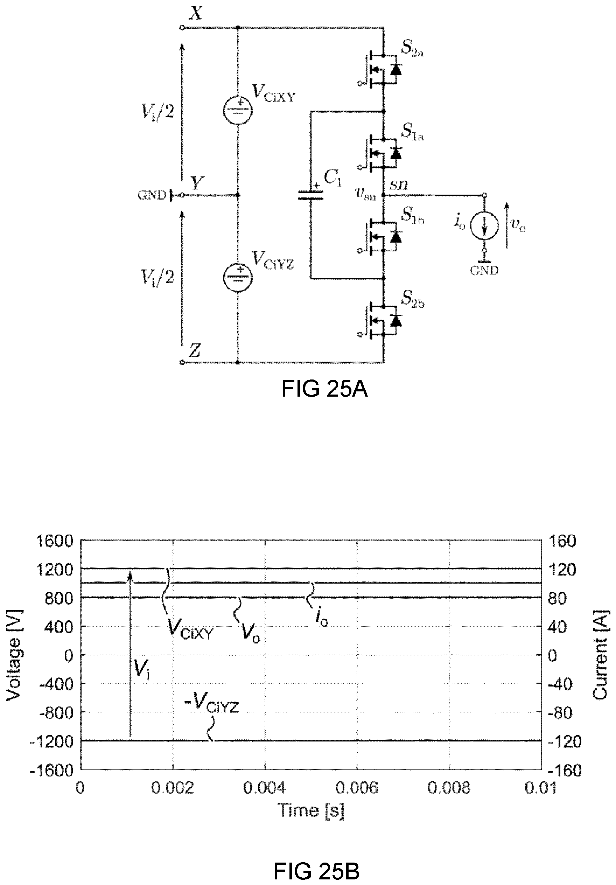

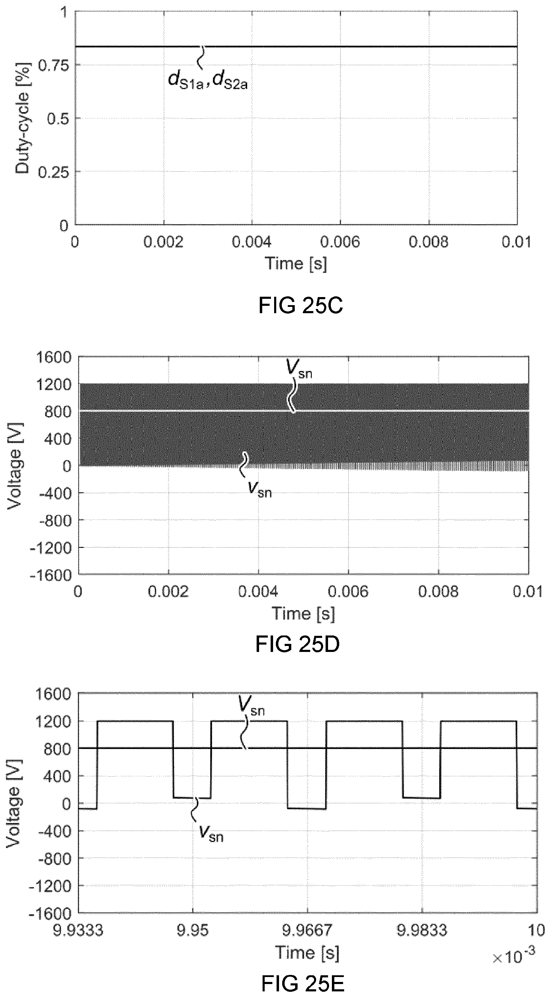

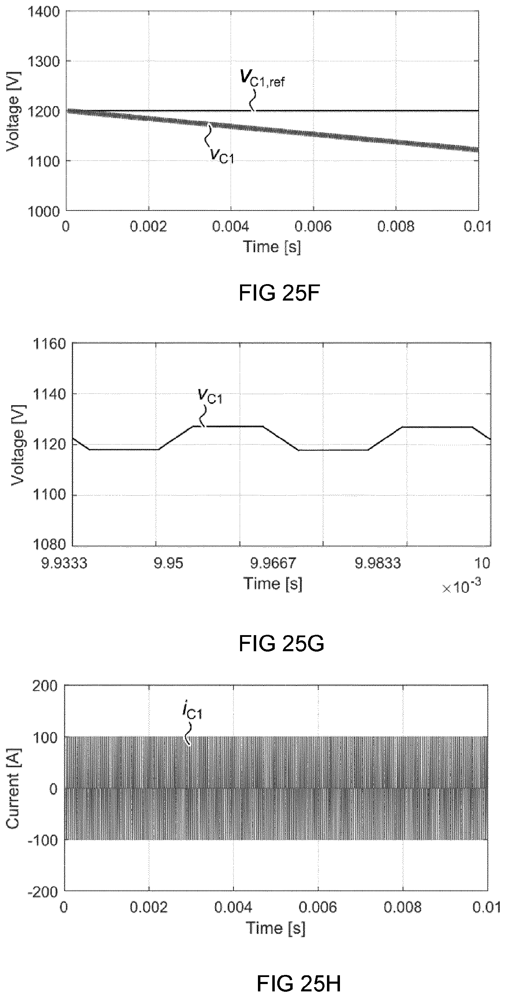

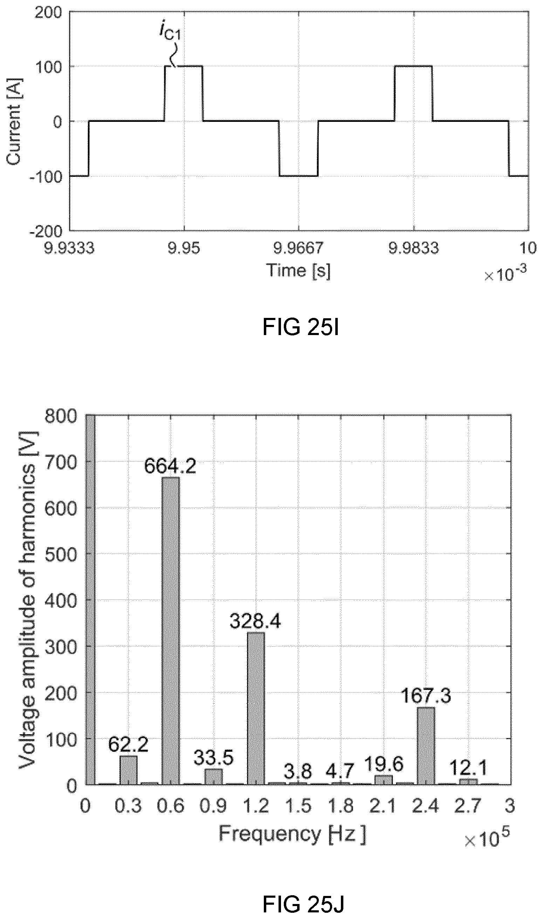

Figure 25A represents a three-level FCC without a voltage balancing circuit and used for comparative simulation example 1; Figure 25 B represents waveforms of the DC-bus voltages, the average value of the output voltage and the output current of comparative simulation example 1; Figure 25C represents a waveform of the duty cycles of the upper main semiconductor switches; Figure 25D represents the switch node voltage and the moving average of the switch node voltage of comparative simulation example 1; Figure 25E is an enlarged portion of the graph of Fig. 25D; Figure 25F represents the FC voltage and the reference voltage of the FC for comparative simulation example 1; Figure 25G is an enlarged portion of the graph of Fig. 25F; Figure 25H represents the current through the FC; Figure 25I is an enlarged portion of the graph of Fig. 25H; Figure 25J represents the harmonic components of the switch node voltage for comparative simulation example 1;

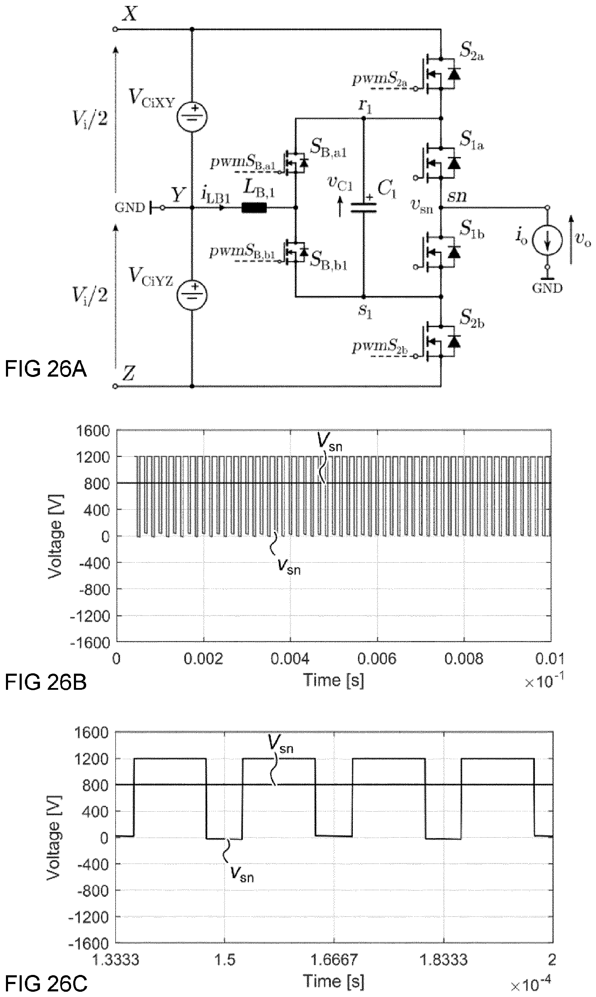

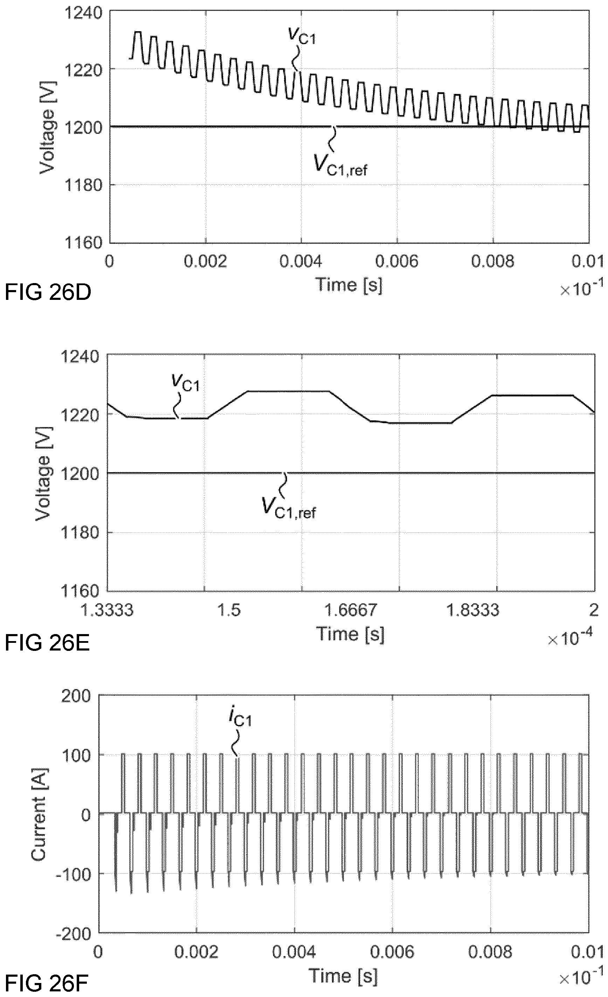

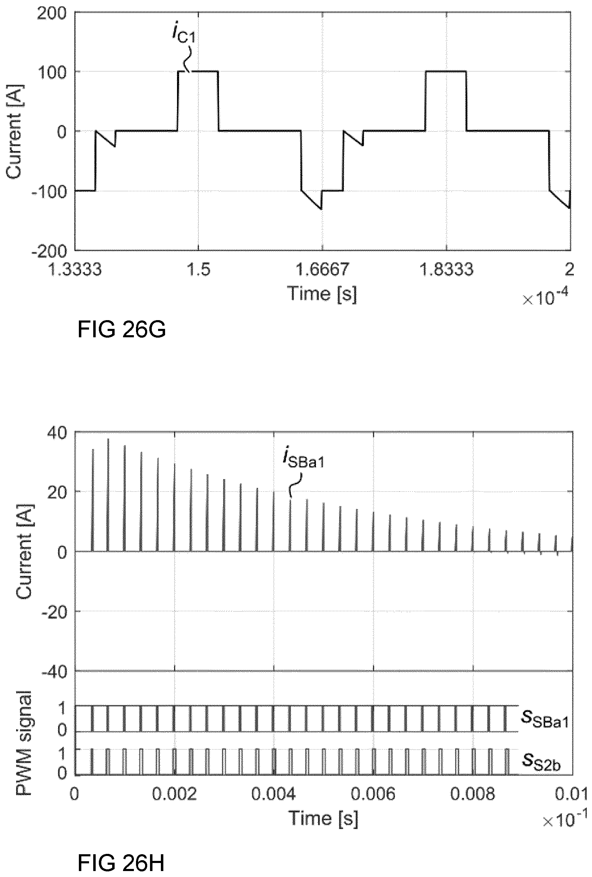

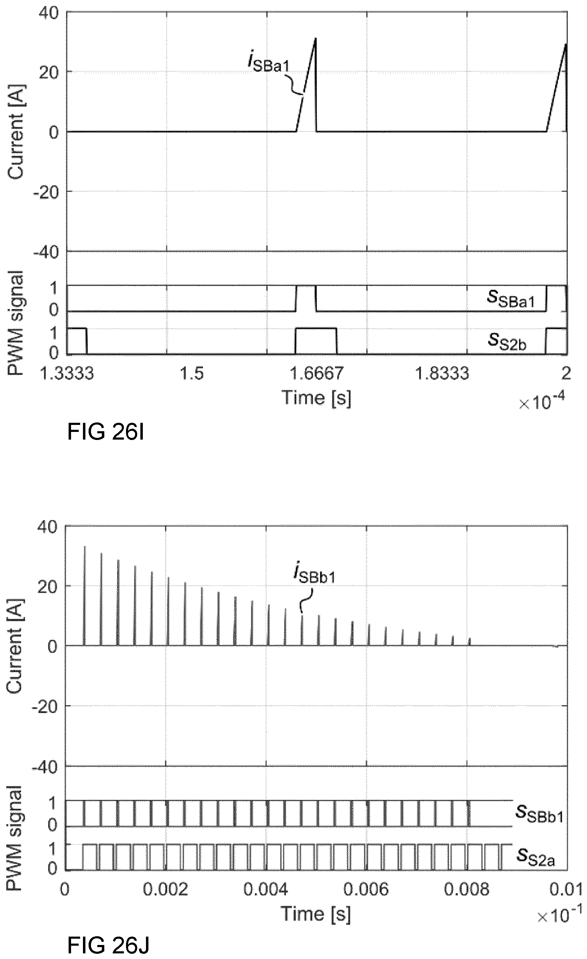

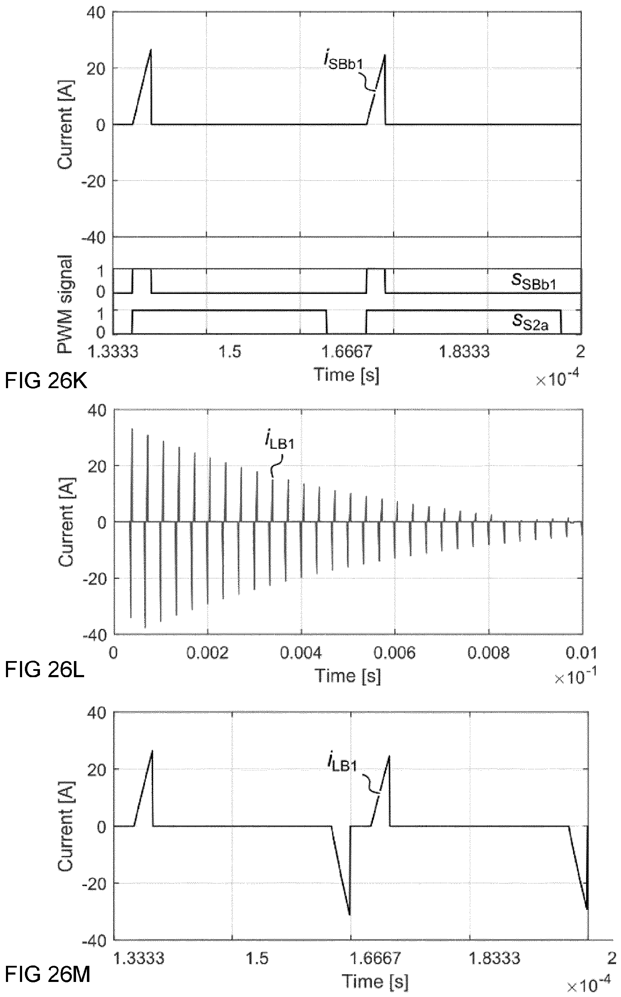

Figure 26A represents a three-level FCC with a voltage balancing circuit and used for invention simulation example 2; Figure 26B represents the switch node voltage and the moving average of the switch node voltage of invention simulation example 2; Figure 26C is an enlarged portion of the graph of Fig. 26B; Figure 26D represents the FC voltage and the reference voltage of the FC for simulation example 2; Figure 26E is an enlarged portion of the graph of Fig. 26D; Figure 26F represents the current through the FC for simulation example 2; Figure 26G is an enlarged portion of the graph of Fig. 26F; Figure 26H represents the current and PWM control signal of a first balancing switch, and the PWM control signal of a main semiconductor switch of the FCC for simulation example 2; Figure 26I represents an enlarged portion of the graph of Fig. 26H; Figure 26J represents the current and PWM control signal of a second balancing switch, and the PWM control signal of a main semiconductor switch of the FCC for simulation example 2; Figure 26K represents an enlarged portion of the graph of Fig. 26J; Figure 26L represents the current in the inductor of the voltage balancing circuit of the FCC of simulation example 2; Fig. 26M represents an enlarged portion of the graph of Fig. 26L;

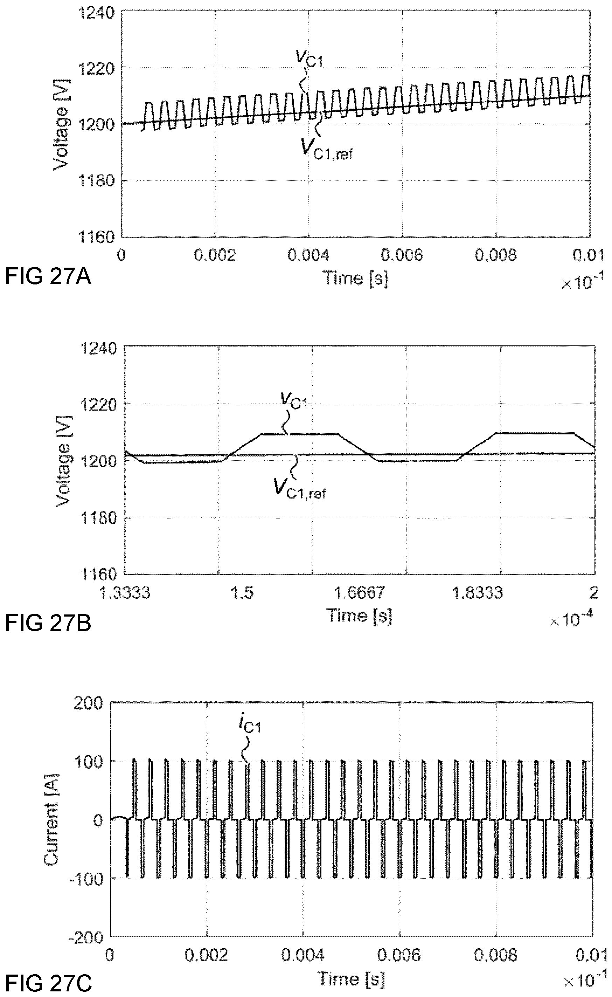

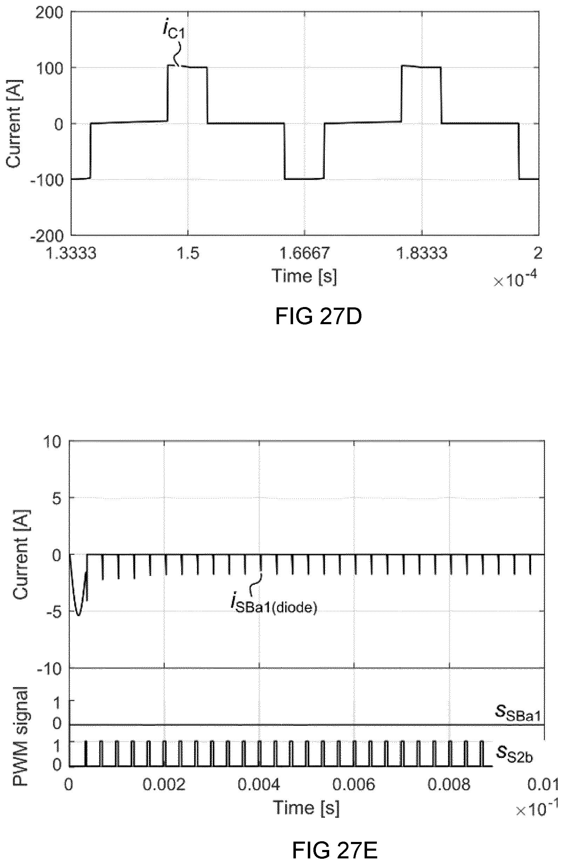

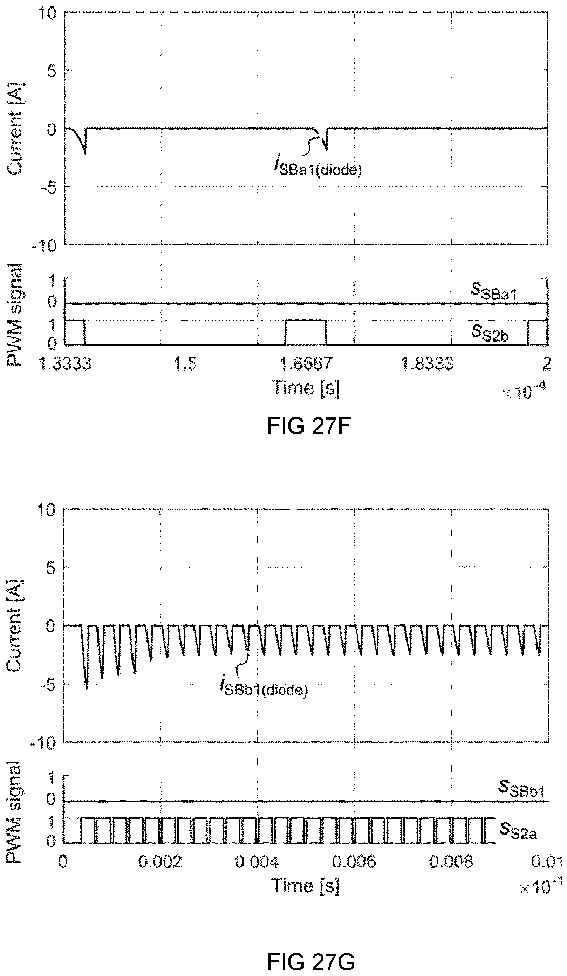

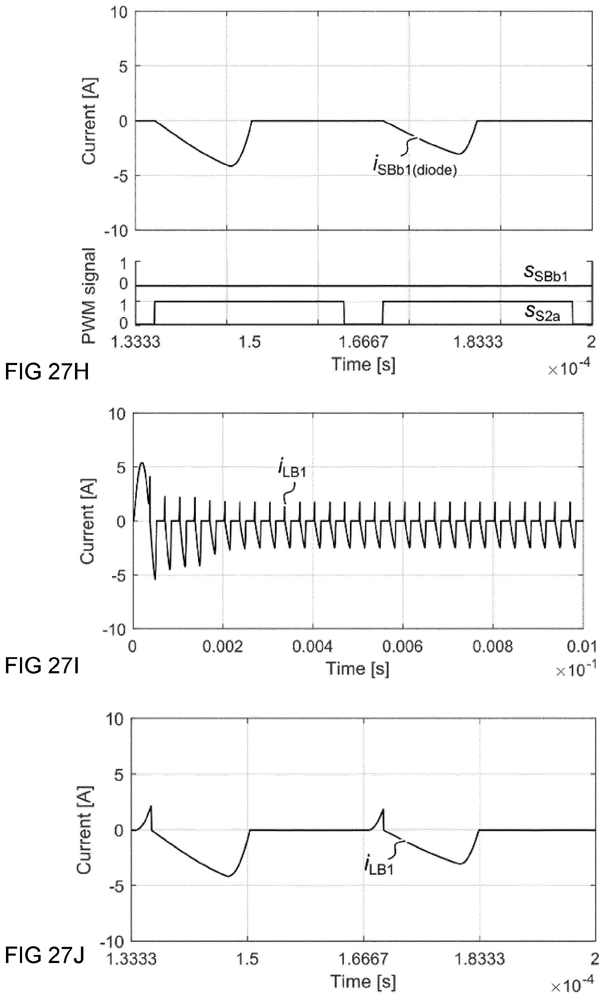

Figure 27A represents the FC voltage and the reference voltage of the FC for simulation example 3; Figure 27B is an enlarged portion of the graph of Fig. 27A; Figure 27C represents the current through the FC for simulation example 3; Figure 27D is an enlarged portion of the graph of Fig. 27C; Figure 27E represents the current and PWM control signal of a first balancing switch, and the PWM control signal of a main semiconductor switch of the FCC for simulation example 3; Figure 27F represents an enlarged portion of the graph of Fig. 27E; Figure 27G represents the current and PWM control signal of a second balancing switch, and the PWM control signal of a main semiconductor switch of the FCC for simulation example 3; Figure 27H represents an enlarged portion of the graph of Fig. 27G; Figure 27I represents the current in the inductor of the voltage balancing circuit of the FCC of simulation example 3; Fig. 27J represents an enlarged portion of the graph of Fig. 27I;

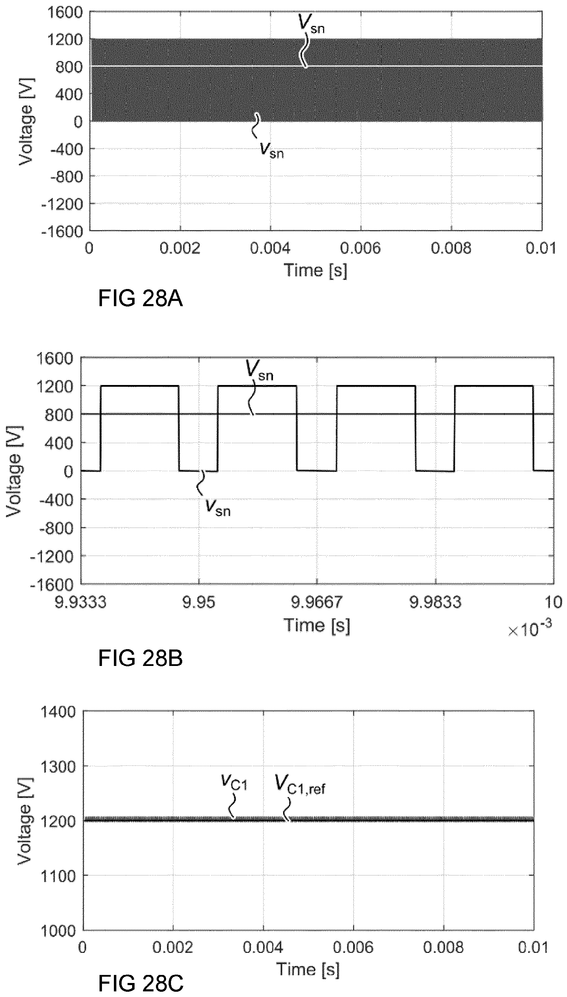

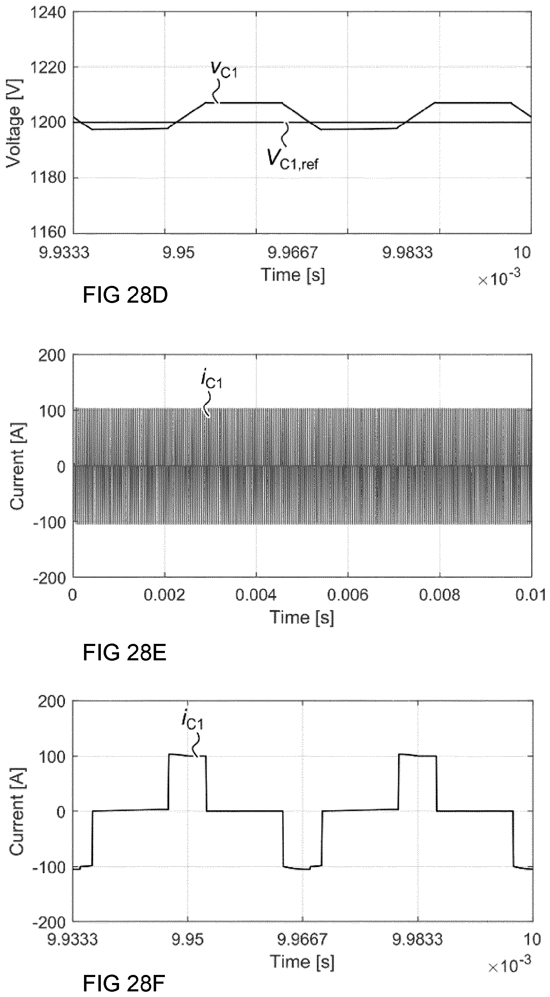

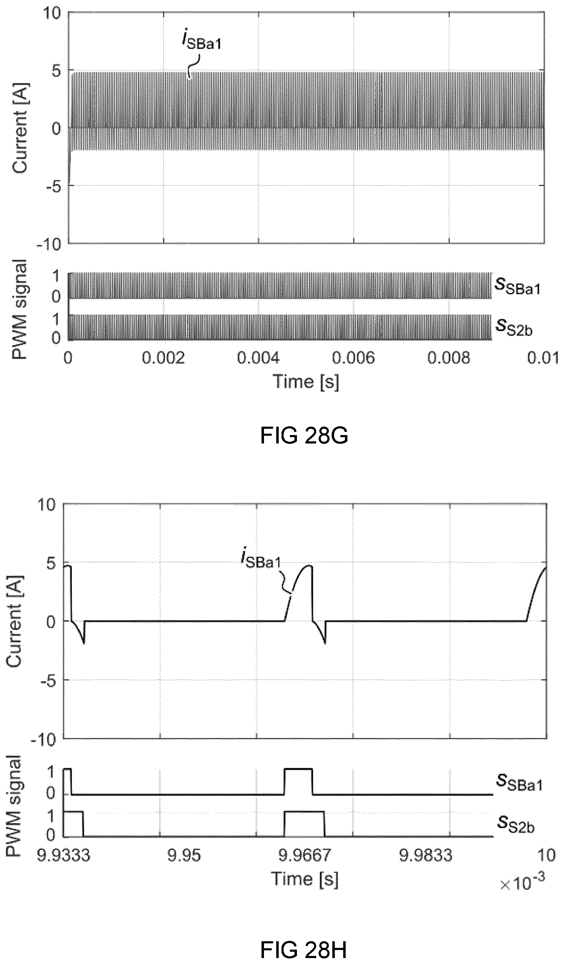

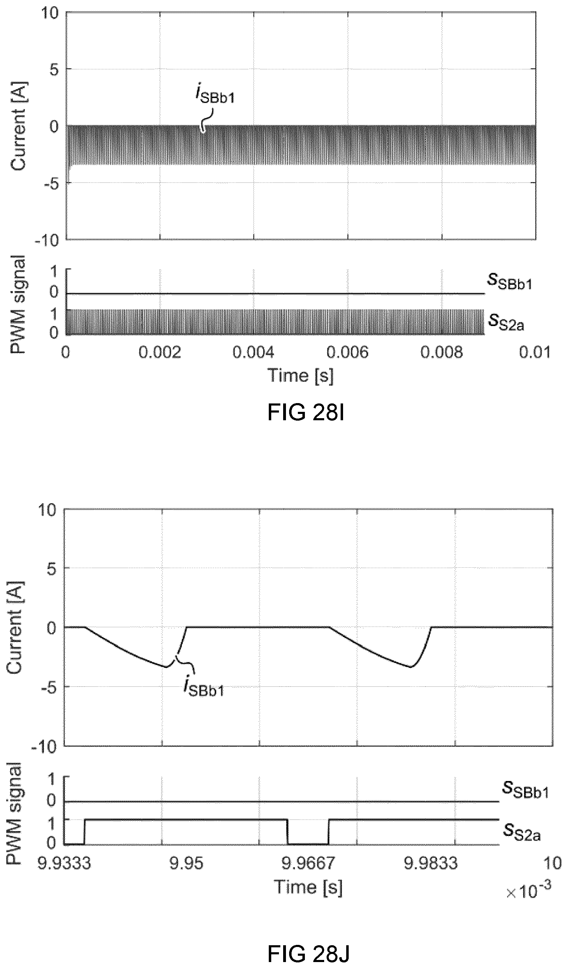

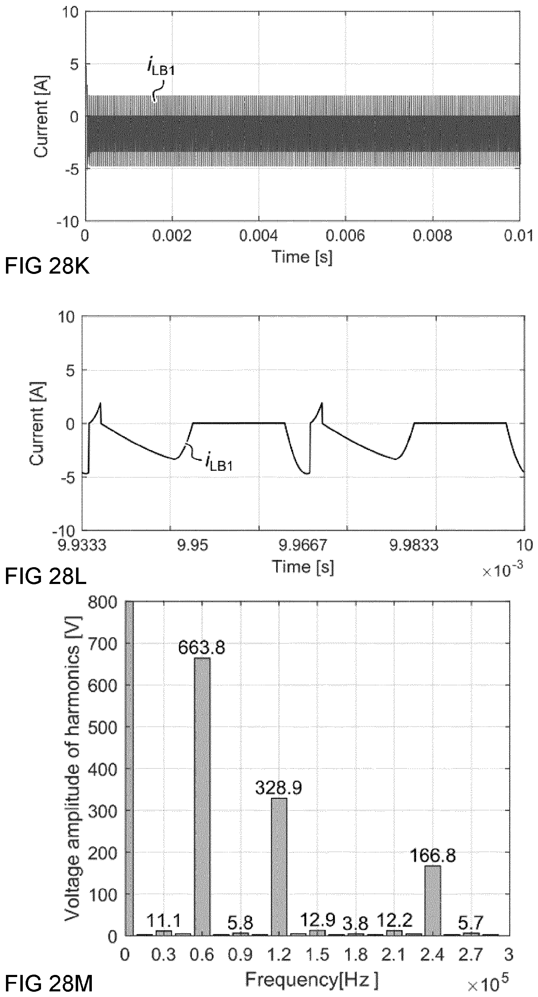

Figure 28A represents the switch node voltage and the moving average of the switch node voltage of invention simulation example 4; Figure 28B is an enlarged portion of the graph of Fig. 28A; Figure 28C represents the FC voltage and the reference voltage of the FC for simulation example 4; Figure 28D is an enlarged portion of the graph of Fig. 28C; Figure 28E represents the current through the FC for simulation example 4; Figure 28F is an enlarged portion of the graph of Fig. 28E; Figure 28G represents the current and PWM control signal of a first balancing switch, and the PWM control signal of a main semiconductor switch of the FCC for simulation example 4; Figure 28H represents an enlarged portion of the graph of Fig. 28G; Figure 28I represents the current and PWM control signal of a second balancing switch, and the PWM control signal of a main semiconductor switch of the FCC for simulation example 4; Figure 28J represents an enlarged portion of the graph of Fig. 28I; Figure 28K represents the current in the inductor of the voltage balancing circuit of the FCC of simulation example 4; Fig. 28L represents an enlarged portion of the graph of Fig. 28K; Figure 28M represents the harmonic components of the switch node voltage for simulation example 4;

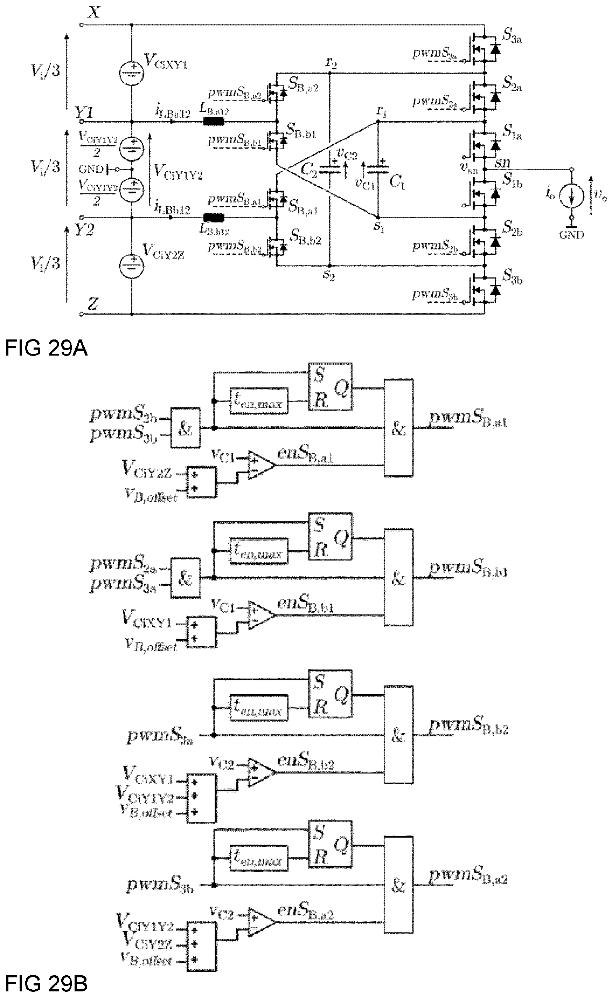

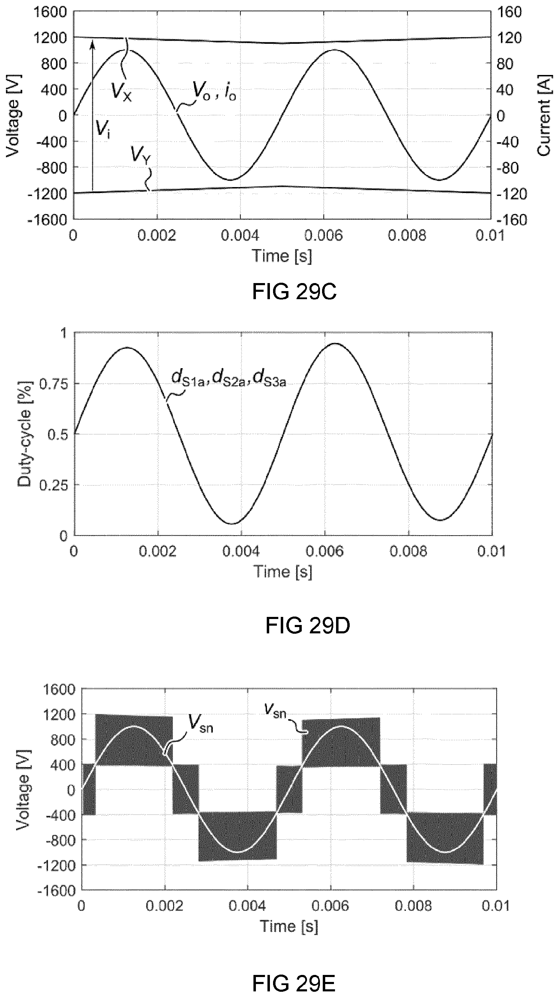

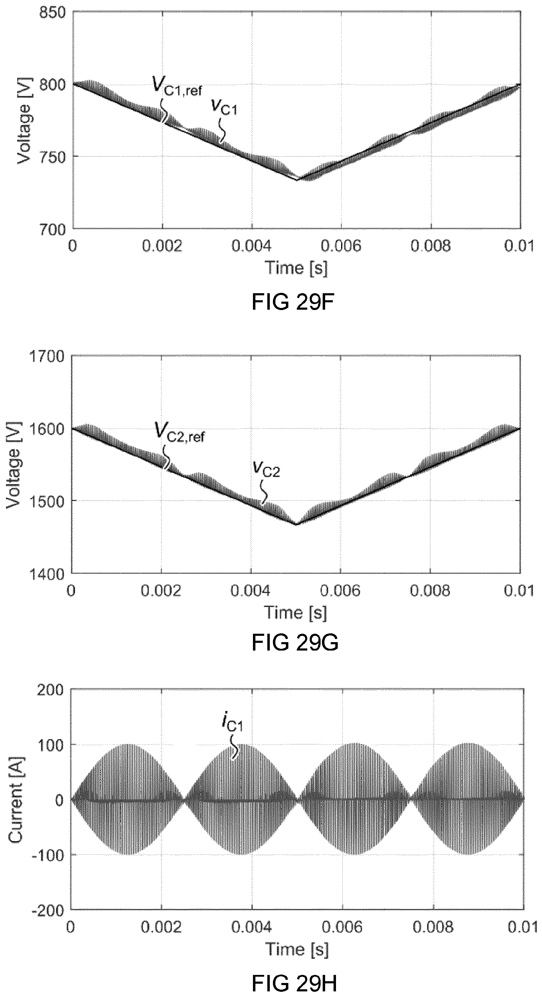

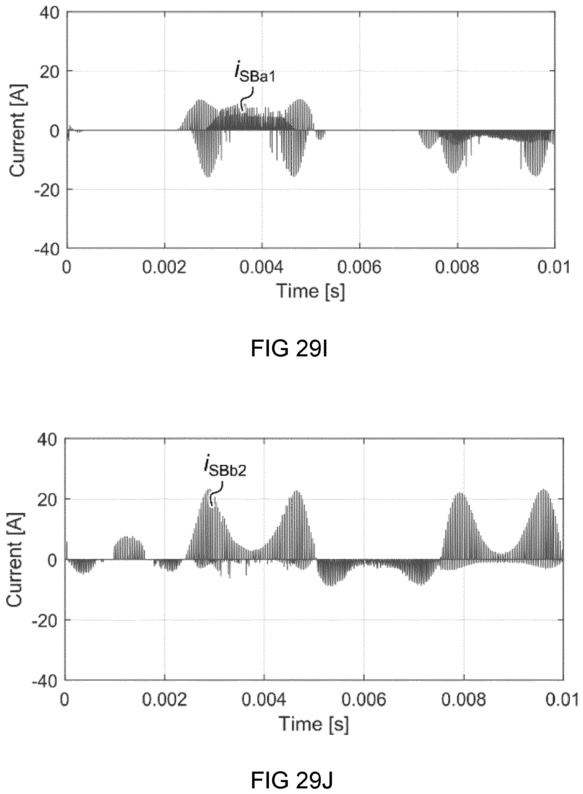

Figure 29A represents a four-level FCC with voltage balancing circuit used in simulation example 5; Figure 29B represents a control logic diagram for generating the PWM control signals of the balancing switches of the FCC of Fig. 29A; Figure 29C represents the operating conditions of the FCC used for simulation example 5; Figure 29D represents the duty cycles of the main semiconductor switches of the FCC of Fig. 29A for simulation example 5; Figure 29E represents the switch node voltage and the moving average of the switch node voltage of simulation example 5; Figure 29F represents the voltage and the reference voltage of the innermost flying capacitor cell for simulation example 5; Figure 29G represents the voltage and the reference voltage of the outer flying capacitor cell for simulation example 5; Figure 29H represents the current through the inner FC cell for simulation example 5; Figure 29I represents the current of a first balancing switch for simulation example 5; Figure 29J represents the current of a second balancing switch for simulation example 5.

### Detailed Description

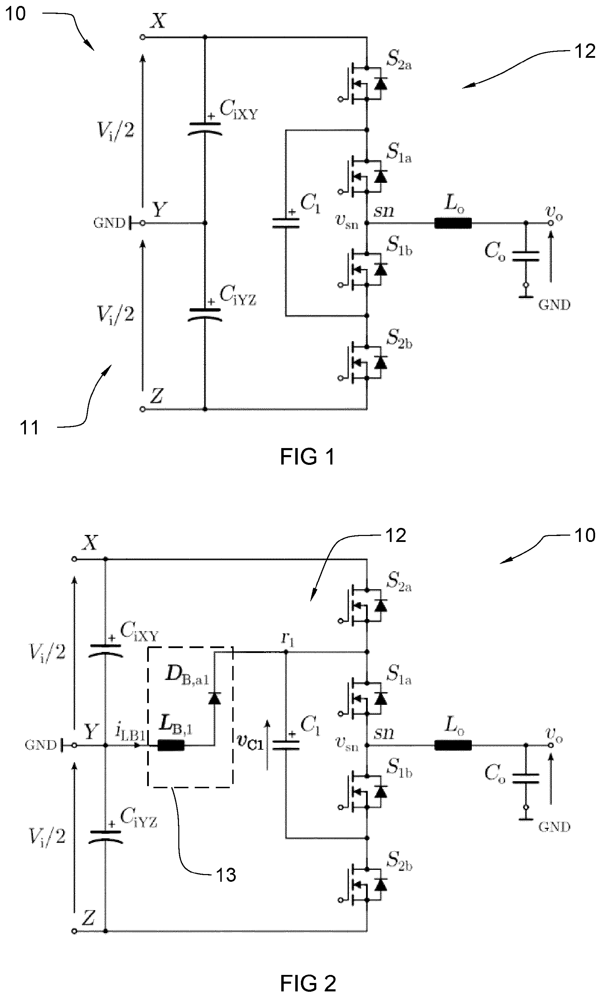

Referring to Fig. 1, the general topology of a three-level flying capacitor converter 10 is first described for ease of understanding. FCC 10 comprises a DC-bus 11 comprising a series connection of two DC-bus capacitors *C_{iXY}, C_{iYZ}* each having a voltage of half the DC-bus voltage *(ν_{CiXY}* = *ν_{CiYZ}* = *Vᵢ*/2). The terminals of the DC-bus capacitors are denoted X, Y, Z with terminal Y forming the common node between DC-bus capacitors *C_{iXY}, C_{iYZ}* and hence forming the midpoint of the DC-bus 11. The FCC 10 further comprises a flying capacitor (FC) circuit 12 and an output filter with inductor and capacitor *Lₒ,* Cₒ respectively. FC circuit 12 is arranged as a flying capacitor bridge leg and comprises a switch node *sn,* two half-bridge semiconductor switch pairs (i.e. half-bridge *S₁ₐ,S_{1b}* and half-bridge *S*₂*ₐ,S*_{*2*b}) and a flying capacitor C₁. Each switch *S*₁*ₐ, S*_{1*b*} and *S*_{2*a*}, *S*_{2*b*} can be formed of an actively operated semiconductor switch, particularly a metal oxide semiconductor field effect transistor (MOSFET) and a diode arranged in antiparallel with the MOSFET. The switches of the first switch pair *S*₁*ₐ, S*_{1*b*} connect the respective positive and negative terminals of the FC C₁ to the switch node *sn.* The switches of the second switch pair *S*_{2*a*}, *S*_{2*b*} connect the respective positive and negative terminals of the FC C₁ to the upper and lower DC-bus nodes X, Z, respectively. The switches of each of the first and second switch pairs are generally operated in a complementary manner, as is well-known in the art, i.e. when one switch (e.g. S₁ₐ) is closed, the other one (e.g. S_{1b}) is open and vice versa. The voltage (*ν*_{*C*1}) of FC *C*₁ is controlled to be equal to, or close to equal to, half the DC-bus voltage (i.e. *ν*_{*C*1} = *Vᵢ*/2) to avoid large harmonic content in the output voltage *νₒ* and to assure equal distribution of the voltages across the semiconductor switches and thus avoid over-voltages. This principle can be extrapolated to FC circuits comprising additional flying capacitors, to provide additional voltage levels at the switch node.

For purpose of understanding aspects of the present disclosure, conventional modulation of the FCC is assumed, in which the outer half bridge (formed by *S*_{2*a*} and *S*_{2*b*} which are complementary switched) and the inner half bridge (formed by *S*_{1*a*} and *S*_{1*b*} which are complementary switched) are operated with equal duty-cycle d (i.e. *d*_{*s*1*a*} = *d*_{*s*2*a*} = *νₒ*/*Vᵢ* + 1/2, and *d*_{*s*1*b*} = 1 - *dₛ₁ₐ, d*_{*s*2*b*} = 1 - *d*_{*s*2*a*}) and 180° phase-shifted PWM signals. Knowing that the duty-cycle d, which is the relative on-time of a semiconductor switch within a switching period *Tₛ* = 1/*fₛ*, with *fₛ* the switching frequency, can be controlled between 0 and 1, the output-voltage range of the FCC 10 is -Vᵢ/2 ≤ *νₒ* ≤ Vᵢ/2 while the switch-node voltage *νₛₙ* typically alternates between two of three possible voltage levels at a fundamental frequency component of 2 · *fₛ*.

The present disclosure provides non-dissipative balance boosters (i.e., voltage balancing circuits) that are capable of auto-balancing the FC voltages of a flying capacitor converter by exchanging energy between the FCs themselves and/or between the FCs and a voltage source, such as the DC-bus voltage sources (e.g. capacitors) in a quasi-lossless manner. The balance boosters of the present disclosure can be classified into two groups:
- Group I: passive non-dissipative charging balance boosters (using diodes connected to the FCs) not according to the claimed invention;
- Group II: active non-dissipative charging/discharging balance boosters (using active semiconductor switches connected to the FCs).

In contrast with the dissipative balance boosters of the prior art which balance the FCs by removing energy from the FCs and dissipating this energy in dissipative passive components, i.e., resistors and/or Zener diodes (or the like, e.g. varistors), in the present disclosure balancing is obtained by exchanging energy between the FCs themselves and/or between the FCs and a voltage source, e.g. the DC-bus voltage sources (e.g. DC-bus capacitors) in a quasi-lossless manner through use of non-dissipative components:
- Group I: diodes, inductors; connected to the FCs;
- Group II: semiconductor switches, inductors; connected to the FCs.

Furthermore, the balance booster (voltage balancing) circuits advantageously do not comprise additional capacitors that would increase the effective capacitance parallel to the main semiconductor switches of the FCC, avoiding a large increase of the switching losses. Nevertheless, the effective capacitance parallel to the power transistors is increased by the output capacitance of the diodes and/or semiconductor switches used in the disclosed balance booster circuits which is typically very low, especially since these devices are generally low-power rated and therefore have a small semiconductor area with low parasitic capacitance.

### Group I: passive non-dissipative charging balance circuits not according to the claimed invention

The passive non-dissipative charging balance boosters of group I rely on one or more passive components (at least one diode and one inductor) to charge a FC when its voltage is too low. The charging takes place in a non-controlled manner (passively) and is obtained by transferring energy from the voltage source (e.g., the DC-bus) to the FCs and/or between the FCs themselves.

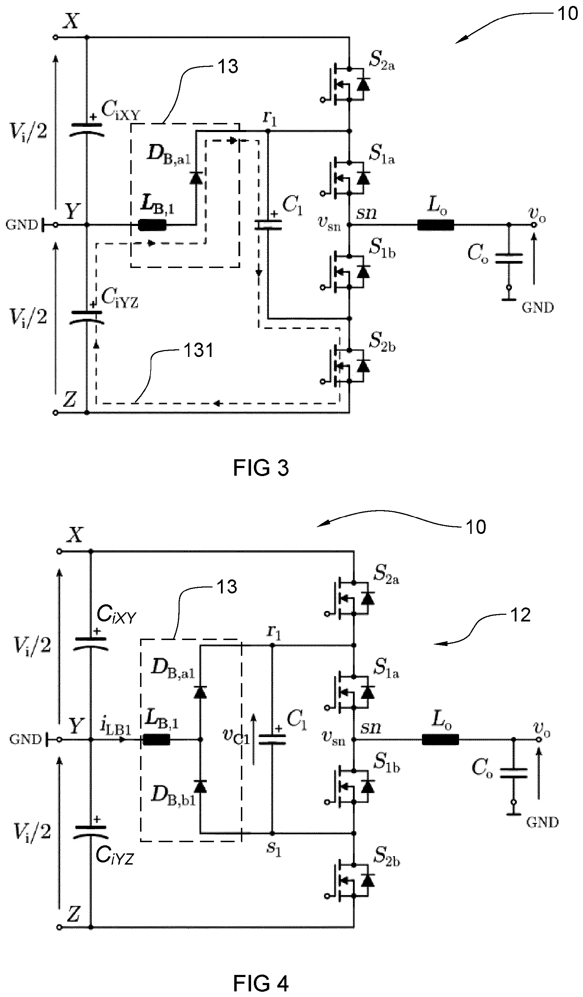

A **first** implementation of such non-dissipative charging balance booster circuit is shown in Fig. 2. The balance booster circuit 13 comprises a passive balancing diode *D*_{*B,a*1} and balancing inductor *L*_{*B,*1} which are connected in series between the upper terminal *r*₁ of the FC *C*₁ to be balanced and the DC-bus midpoint Y. When semiconductor switch *S*_{2*b*} is in the on-state and voltage *ν*_{*C*1} < Vᵢ/2 (with Vᵢ/2 the required voltage of *C*₁) a current will flow from Y into *r*₁ according to the path 131 shown in Fig. 3 (DC-bus capacitor *C_{iYZ}* acts in parallel with *C*₁), i.e. the current flows through inductor *L*_{*B*,1} *(i*_{*LB*1} *>* 0) and diode *D*_{*B,a*1}, charging *C*₁. As long as *ν*_{*C*1} < *Vᵢ*/2, energy will be transferred from the DC-bus capacitor *C_{iYZ}* to *C*₁ in each interval of the switching period where S_{Zb} is in the on-state. This charging of *C*₁ occurs in a quasi-lossless manner as no dissipative components are present in the conduction path 131. It will be convenient to note that the on-state of *S*_{2b} occurs every switching cycle except for the case when *d*_{*s*2*b*} = 0 which typically never occurs in a real application (at least not for a long time interval). Discharging of *C*₁ is not possible through inductor *L*_{*B,*1} and diode *D*_{*B,a*1} due to the unipolar current direction of the diode. The minimum voltage rating of the diode *D*_{*B,a*1} is equal to Vᵢ/2 which is the same as the minimum voltage rating of the main semiconductor switches (*S*_{1*a*}, *S*_{2*a*}, *S*₁*_{b}, S*_{2*b*}).

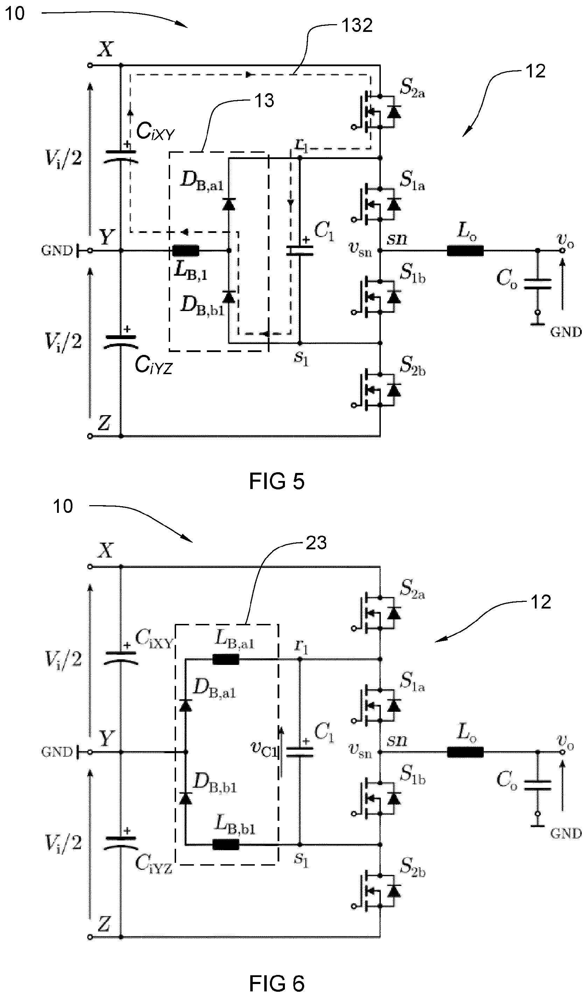

In Fig. 4, an extended implementation of the voltage balancing (balance booster) circuit 13 of Fig. 2 is shown where an additional balancing diode *D*_{*B,b*1} is connected between the lower terminal *s*₁ of *C*₁ and the anode of diode *D*_{*B,a*1} forming a half-bridge pair *(D*_{*B,a*1}, *D*_{*B,b*1}). The inductor *L*_{*B*,1} of the circuit 13 is connected between the DC-bus midpoint Y and the anode of diode *D*_{*B,a*1}*.* When *S*₂ₐ is in the on-state and voltage *ν*_{*C*1} < Vᵢ/2 a current will flow from *s*₁ into Y according to the path 132 shown in Fig. 5 (DC-bus capacitor *C_{iXY}* acts in parallel with *C*₁), i.e. the current flows through inductor *L*_{*B*,1} *(i*_{*LB*1} *<* 0) and diode *D*_{*B,b*1}*,* charging *C*₁. As long as *ν*_{*C*1} < *Vᵢ*/2, energy will be transferred from the DC-bus capacitor *C_{iXY}* to *C*₁ each interval of the switching period where *S*₂ₐ is in the on-state. In combination with the charging path 131 depicted in Fig. 3, i.e. via switch *S*_{2*b*}, inductor *L*_{*B,*1} and diode *D*_{*B,a*1}, an alternating balancing path and thus faster balancing of *C*₁ is obtained compared to the circuit of Fig. 3 with a single diode. In addition, a more symmetric charging with respect to the load conditions is achieved.

An alternative implementation of a balance booster circuit 23 to charge *C*₁ is shown in Fig. 6, where two balancing inductors *L*_{*B,a*1} and *L*_{*B,b*1} are used which, however, each see a smaller average charging current compared to the inductor *L*_{*B*,1} of circuit 13, i.e. charging current flows from Y through *D*_{*B,a*1} and *L*_{*B,a*1} into *r*₁ when *S*_{2*b*} is in the on-state and *ν*_{*C*1} < *Vᵢ*/2, and charging current flows from *s*₁ through *D*_{*B,b*1} and *L*_{*B,b*1} into Y when *S*₂ₐ is in the on-state and *ν*_{*C*1} < *Vᵢ*/2. So the charging current is distributed among two balancing inductors instead of shared by one.

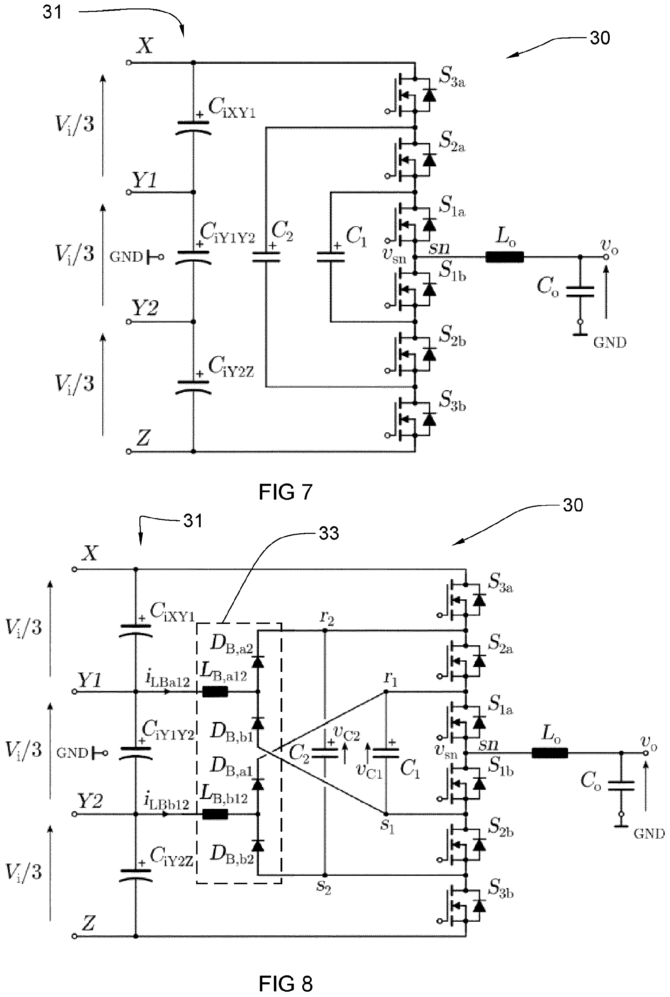

The non-dissipative charging balance booster circuits 13, 23 can also be applied for FCCs with a higher number of FCs, for example a four-level FCC 30 shown in Fig. 7 with three half-bridge semiconductor switch pairs (i.e. half-bridge *S*₁*ₐ, S*₁*_{b},* half-bridge *S*₂*ₐ,S*_{2*b*} and half-bridge *S*₃*ₐ, S*_{3*b*}) connected between DC-bus terminals X,Z formed by a series connection of three DC-bus capacitors *C*_{*iXY*1}, *C*_{*iY*1*Y*2}*, C*_{*iY*2}*_{Z}.* The DC-bus 31 comprises four terminals X, Z and Y1, Y2, with Y1 and Y2 being common nodes of DC-bus capacitors *C*_{*iXY*1}, *C*_{*iY*1*Y*2} and *C*_{*iY*1*Y*2}*, C*_{*iY*2*Z*} respectively. The three DC-bus capacitors have a voltage of one third the DC bus voltage (*ν*_{*CiXY*1} = *ν*_{*CiY*1*Y2*} = *ν_{CiY2Z}* = *Vᵢ*/3). The FCC 30 further comprises an output filter *Lₒ, Cₒ,* and two FCs *C*₁ and *C*₂ whose voltages need to be controlled to respectively one-third and two-third of the DC-bus voltage (i.e. *ν*_{*C*1} = *Vᵢ*/3, *ν*_{*C*2} = 2*Vᵢ*/3) to avoid large harmonic content in the output voltage and to assure equal distribution of the voltages across the semiconductor switches and thus avoid over-voltages. The operating principle of this four-level FCC is similar to that of the three-level FCC 10, i.e., the half-bridges are operated with equal duty-cycle (i.e. *d*_{*s*1*a*} = *d*_{*s*2*a*} = *d*_{*s*3*a*} = *νₒ*/*Vᵢ +* 1/2, and *d*_{1*b*} = 1 - *d*_{*s*1}*ₐ, d*_{*s*2*b*} = 1 - *d*_{*s*2}*ₐ, d*_{*s*3*b*} = 1 - *d*_{*s*3a}) and 120° phase-shifted PWM signals. Referring to Fig. 8, a balance booster circuit 33 for the four-level FCC 30 comprises a first balancing circuit for *C*₁ consisting of balancing diodes *D*_{*B,a*1} and *D*_{*B,b*1} and balancing inductors *L*_{*B,a*12} and *L*_{*B,b*12} and a second balancing circuit for *C*₂ consisting of balancing diodes *D*_{*B,a*2} and *D*_{*B,b*2} and balancing inductors *L*_{*B,a*12} and *L*_{*B,b*12}*.* Inductors *L*_{*B,a*12} and *L*_{*B,b*12} are thus shared by both first and second balancing circuits and are respectively connected to the DC-bus voltage nodes Y1 and Y2 which have voltages of respectively 2*Vᵢ*/3 and *Vᵢ*/3 with respect to the negative DC-bus rail Z.

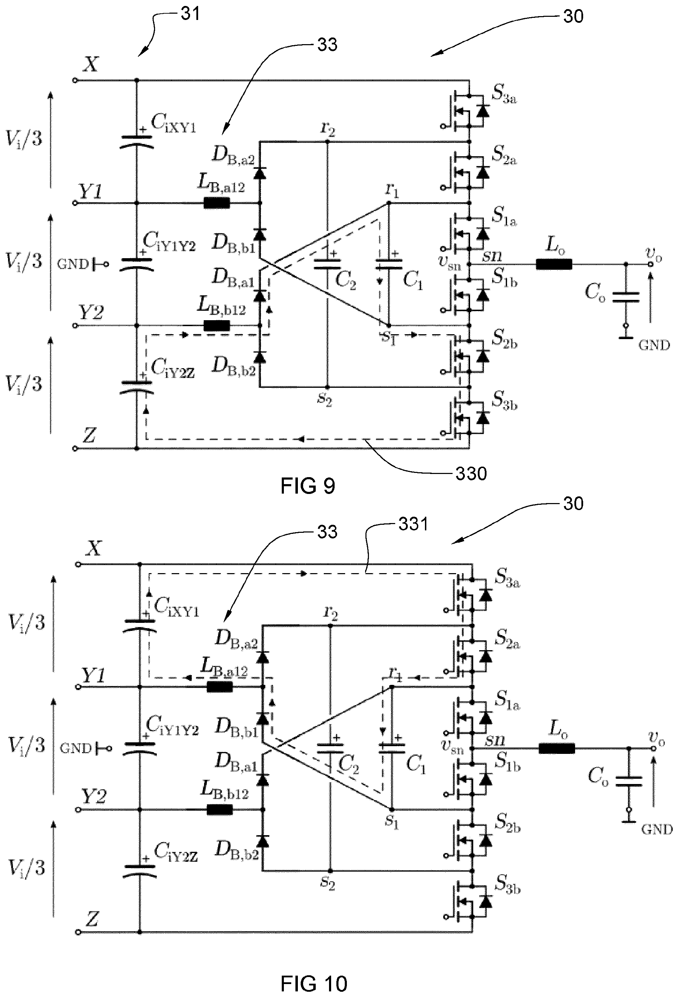

Charging of C₁ can take place through inductor *L*_{*B,b*12}*,* diode *D*_{*B,a*1} and through switches *S*_{2b} and S_{3*b*} when they are both in the on-state, i.e., when voltage *ν*_{*C*1} < *Vᵢ*/3 a current will flow from Y2 into *r*₁ according to the path 330 shown in Fig. 9 (DC-bus capacitor *C*_{*iY*2*Z*} acts in parallel with *C*₁), i.e. the current flows through inductor *L*_{*B,b*12} *(i*_{*LBb*12} > 0) and diode *D*_{*B,a*1}, charging *C*₁. As long as *ν*_{*C*1} < *Vᵢ*/3, energy will be transferred from the DC-bus capacitor *C*_{*iY*2*Z*} to *C*₁ in each interval of the switching period where *S*_{2b} and S_{3*b*} are in the on-state. Charging of C₁ can also take place through inductor *L*_{*B,a*12}*,* diode *D*_{*B,b*1} and through switches *S*₂ₐ and *S*₃ₐ when they are both in the on-state, i.e. when voltage *ν*_{*C*1} < *Vᵢ*/3 a current will flow from *s*₁ into Y1 according to the path 331 shown in Fig. 10 (DC-bus capacitor *C*_{*iXY*1} acts in parallel with *C*₁), i.e. the current flows through inductor *L*_{*B,a*12} *(i*_{*LBa*12} < 0) and diode *D*_{*B,b*1}*,* charging *C*₁. As long as *ν*_{*C*1} *< Vᵢ*/3, energy will be transferred from the DC-bus capacitor *C*_{*iXY*1} to *C*₁ in each interval of the switching period where *S*_{2*a*} and *S*₃ₐ are in the on-state. Since switches *S*_{2*a*}, *S*_{2b} and *S*₃*ₐ,* S_{3*b*} are switched complementarily in conventional FCC operation, the current paths 330 and 331 are alternated.

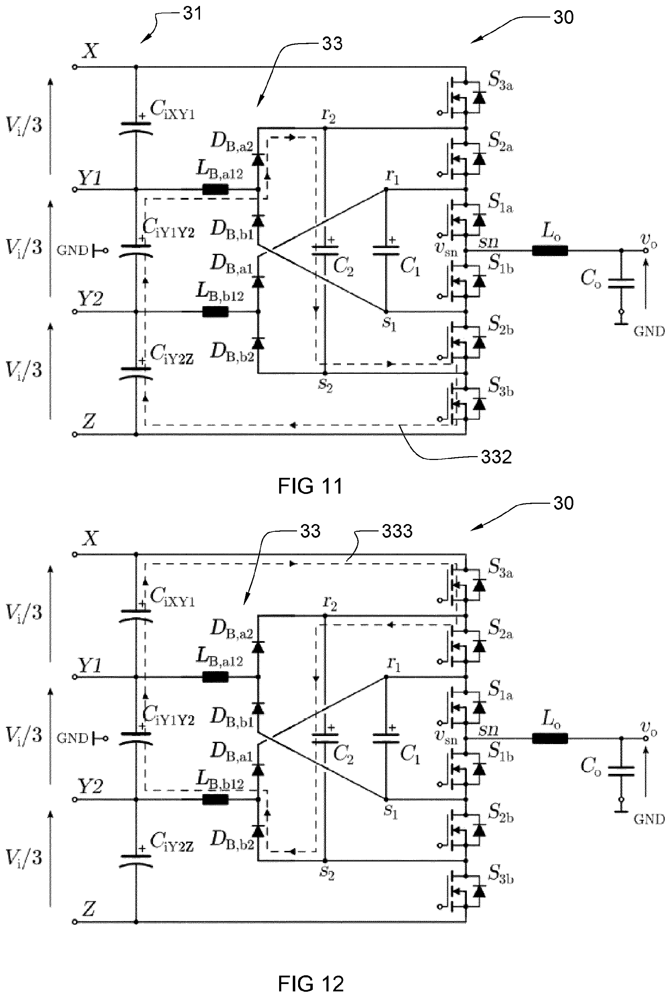

Charging of *C*₂ can take place through inductor *L*_{*B,a*12}, diode *D*_{*B,a*2} and through switch S_{3*b*} when it is in the on-state, i.e. when voltage *ν*_{*C*2} < 2*Vᵢ*/3 a current will flow from Y1 into *r*₂ according to the path 332 shown in Fig. 11 (the series connection of DC-bus capacitors *C*_{*iY*1*Y*2} and *C*_{*iY*2*Z*} acts in parallel with *C*₂), i.e. the current flows through inductor *L*_{*B,a*12} *(i*_{*LBa*12} > 0) and diode *D*_{*B,a*2}*,* charging *C*₂. As long as *ν*_{*C*2} < 2*Vᵢ*/3, energy will be transferred from the DC-bus capacitors *C*_{*iY*1*Y*2} and *C*_{*iY*2*Z*} to *C*₂ in each interval of the switching period where S_{3*b*} is in the on-state. Charging of *C*₂ can alternatively take place through inductor *L*_{*B,b*12}*,* diode *D*_{*B,b*2} and through switch *S*₃ₐ when it is in the on-state, i.e. when voltage *ν*_{*C*2} < 2*Vᵢ*/3 a current will flow from *s*₂ into Y2 according to the path 333 shown in Fig. 12 (the series connection of DC-bus capacitors *C_{iXY},* and *C*_{*iY*1*Y*2} acts in parallel with *C*₂), i.e. the current flows through inductor *L*_{*B,b*12} and diode *D*_{*B,b*2}*,* charging *C*₂. As long as *ν*_{*C*2} < 2Vᵢ/3, energy will be transferred from the DC-bus capacitors *C*_{*iXY*1} and *C*_{*iY*1*Y*2} to *C*₂ in each interval of the switching period where S₃a is in the on-state.

For the non-dissipative charging balance booster circuit 33, two main semiconductor switches need to be simultaneously in the on-state in order to charge *C*₁, i.e. either *S*_{2b} and *S*_{3*b*}, or *S*_{2*a*} and *S*_{3*a*}. Depending on the output voltage *νₒ* of the FCC 30 and depending on the applied modulation scheme (here conventional modulation is assumed), within a switching period there are typically always intervals where *S*_{2b} and S_{3*b*} are simultaneously in the on-state and/or intervals where *S*_{2*a*} and *S*_{3*a*} are simultaneously in the on-state, guaranteeing charging of *C*₁ in any load conditions. Balancing diodes *D*_{*B,a*1} and *D*_{*B,b*1} need to be rated for 2*Vᵢ*/3 while balancing diodes *D*_{*B,a*2} and *D*_{*B,b*2} need to be rated for *Vᵢ*/3.

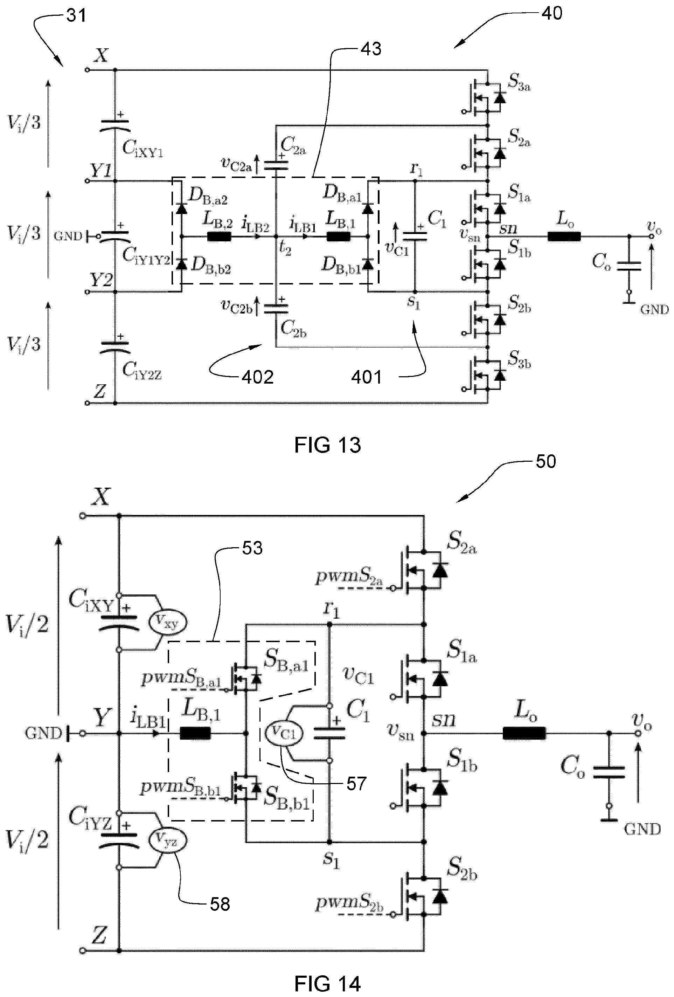

Referring to Fig. 13, an alternative implementation of a FCC 40 comprising a non-dissipative charging balance booster circuit 43 differs from the FCC 30 and balance booster circuit 33 in that FC *C*₂ of FCC 30 is now implemented as a series connection of two capacitors *C*₂ₐ and C_{2b} whose voltages need to be controlled to one-third of the DC-bus voltage each (i.e. *ν*_{*C*2}*ₐ = ν*_{*C*2*b*} = *Vᵢ*/3).The flying capacitor circuit of FCC 40 hence comprises two capacitor cells 401, 402 Capacitor cell 401 comprises capacitor C₁. Capacitor cell 402 comprises capacitors C₂ₐ, C_{2b} connected in series. All capacitors C₁, C₂ₐ, C_{2b} of the capacitor cells 401, 402 have equal reference voltage corresponding to one third of the DC-bus voltage Vᵢ.

**Balance** booster circuit 43 comprises a balancing circuit of *C*₁ which comprises balancing diodes *D*_{*B,a*1} and *D*_{*B,b*1} and balancing inductor *L*_{*B*,1} connected to the midpoint *t*₂ of *C*₂ₐ and *C*₂*_{b}.* Charging of *C*₁ now occurs by transferring energy from *C*₂ₐ to *C*₁ when *S*_{2*a*} is in the on-state and *ν*_{*C*1} < *Vᵢ*/3 assuming that *ν*_{*C*2*a*} = *Vᵢ*/3, and by transferring energy from C_{2b} to *C*₁ when *S*_{2b} is in the on-state and *ν*_{*C*1} < *Vᵢ*/3 assuming that ν_{*C*2}*_{b} = Vᵢ*/3. The charging conduction path when S₂ₐ is in the on-state runs from capacitor C₂ₐ through S₂ₐ to capacitor C₁ and further from terminal s₁ through diode D_{B,b1} and inductor L_{B,1} to node t₂. The charging conduction path when *S*_{2b} is in the on-state runs from capacitor C_{2b} to node t₂, inductor L_{B,1}, diode D_{B,a1} and terminal r₁ to capacitor C₁ and further from terminal s₁ through *S*_{2b} to C_{2b}. Since S₂ₐ and S_{2b} are switched complementarily, the two conductions paths alternate. Charging of *C*₁, however, results in discharging of *C*₂ₐ and/or C_{2b} which could result in ν_{*C*2*a*} and/or ν_{*C*2*b*} to drop below *Vᵢ*/3 causing an imbalance situation. This can be compensated by having balance booster circuit 43 comprise a balancing circuit of *C*₂ₐ and C_{2b} which comprises balancing diodes *D*_{*B,a*2} and *D*_{*B,b*2} and balancing inductor *L*_{*B,*2}*.* Charging of *C*₂ₐ occurs by transferring energy from *C_{iXY},* to *C*₂ₐ when *S*_{3*a*} is in the on-state and ν_{*C*2*a*} < *Vᵢ*/3 assuming that *ν*_{*CiXY*1} = *Vᵢ*/3*.* The conduction path runs from C_{iXY1} through S₃ₐ to *C*₂ₐ and further from node t₂ through inductor L_{B,2} and diode D_{B,a2} to terminal Y1. Charging of *C*_{2*b*} occurs by transferring energy from *C*_{*iY*2*Z*} to *C*_{2*b*} when S_{3*b*} is in the on-state and ν_{*C*2}*_{b} < Vᵢ*/3 assuming that *ν*_{*CiY*2*Z*} = *Vᵢ*/3. The conduction path runs from *C*_{*iY*2*Z*} (terminal Y2) through diode *D*_{*B,b*2} and inductor L_{B,2} to node t₂ and capacitor C_{2b} and further through S_{3*b*} to terminal Z. Note that here diodes *D*_{*B,a*1} and *D*_{*B,b*1}*,* as well as diodes *D*_{*B,a*2} and *D*_{*B,b*2} need to be rated for *Vᵢ*/3. Generally it can be said that the non-dissipative charging balance booster circuit of Fig. 13 charges C₂ₐ, C_{2b} and *C*₁ in a cascaded manner (*C*₂ₐ and *C*_{2*b*} are charged from the DC-bus 31 while *C*₁ is charged from *C*₂ₐ and *C_{2b}*).

When charging is required for all FCs *(C*₂*ₐ,C*₂*_{b}, C*₁), the FCs *C*₂ₐ and *C*_{2*b*} will reach the reference voltage (*Vᵢ*/3) faster than *C*₁ as determined by complex charging dynamics, including FC ripple voltages which are influenced by the load conditions. The passive non-dissipative charging of the FCs via diodes can result in a slight voltage lift (offset voltage) of the average FC voltage with respect to the reference value. This is the result of a natural clamping mechanism where the balancing diodes conduct when the voltage of the respective FCs is lower than the voltage at the node to which they are clamped during the on-state of one of the switches of the FCC, as explained above. Therefore, and in case the FC voltages have a ripple voltage caused by the periodical flow of the load current through the FCs, the average value of the FC voltages can be slightly higher or lower than the reference voltage which is further referred to as FC voltage lift. This voltage lift results in a minor increase of the harmonics in the output voltage as well as slight unequal distribution of the voltage across the semiconductor switches, which are typically both within acceptable values and still greatly less than in case no balance booster circuit is used, as will also be illustrated in the simulation examples further below. This applies for all the charging balance booster circuits of the present disclosure.

### Group II: active non-dissipative charging and discharging balance circuits

In the following, some examples of active non-dissipative balance boosters (Group II) are described. These active balance boosters are capable of charging and discharging FCs. The below active non-dissipative balance boosters rely on one or more active balancing components, i.e. comprising at least one actively operated semiconductor switch, and passive balancing components, i.e. comprising at least one diode and one inductor, to discharge a FC when its voltage is too high and also charge the FC when its voltage is too low. The diode can refer to the internal anti-parallel body-diode of the actively operated semiconductor switch (e.g. MOSFET). The discharging takes place in a controlled manner through active operation of the at least one semiconductor switch and is obtained by transferring energy from the FCs to the DC-bus and/or between the FCs themselves. The charging can take place in a non-controlled manner, i.e. passively, through operation of the at least one diode and is obtained by transferring energy from the DC-bus to the FCs and/or between the FCs themselves according to the principles described for the Group I balance boosters.

For any of the circuits of Group I, during charging of a FC, a parallel connection of the particular FC whose voltage is too low with another source (e.g. DC-bus capacitor) occurs due to the closing of one or more of the main semiconductor switches of the FCC and due to forward bias condition of a balancing diode as a result of the voltage difference between the mentioned source and the particular FC to be charged. When the source voltage is higher than the FC voltage, the balancing diode is forward biased and a charging current will start to flow. This charging current is limited by the corresponding balancing inductor arranged in the path of the charging current, hence avoiding too high charging current. By connecting the balancing diode and inductor to appropriate voltage nodes (e.g. created at the DC-bus), the FCs are charged to the correct voltage levels. This also means that the voltage which is inducing the charging current in the balancing inductor is small and equal to the imbalance voltage between the source and the FC to be balanced.

By now adding active semiconductor balancing switches in anti-parallel with the balancing diodes, it is possible to also discharge the FCs when their voltage is higher than the mentioned source voltage. This is applicable for all the previously disclosed passive non-dissipative charging balance boosters (Group I) and is illustrated in Fig. 14 by extending the example of Fig. 4 considering a three-level FCC 50 with a single FC *C*₁ whose voltage needs to be controlled to be equal to, or close to equal to, half the DC-bus voltage (i.e. *ν*_{*C*1} = *Vᵢ*/2). Compared to the passive balance booster circuit 13 of Fig. 4, the active balance booster circuit 53 of Fig. 14 comprises active semiconductor switches S_{B,a1} and S_{B,b1} in replacement of the diodes D_{B,a1} and *D*_{*B,b*1} of circuit 13. Charging of C₁ is achieved through the (internal) anti-parallel diode of S_{B,b1} thereby obtaining the current path 132 as indicated in Fig. 5. Discharging of *C*₁ can be achieved by switching balancing switch *S*_{*B,a*1} synchronously with main semiconductor switch *S*_{2*b*} so that FC C₁ is connected parallel to DC-bus capacitor C_{iYZ}. *S*_{*B,a*1} is advantageously turned on (synchronously with S_{2b}) when *ν*_{*C*1} > *Vᵢ*/2. Discharging of *C*₁ can alternatively or in addition be achieved by switching balancing switch *S*_{*B,b*1} synchronously with main semiconductor switch *S*_{2*a*}, so that FC C₁ is connected parallel to DC-bus capacitor C_{iXY}. *S*_{*B,b*1} is advantageously turned on (synchronously with *S*_{2*a*}) when *ν*_{*C*1} > *Vᵢ*/2.

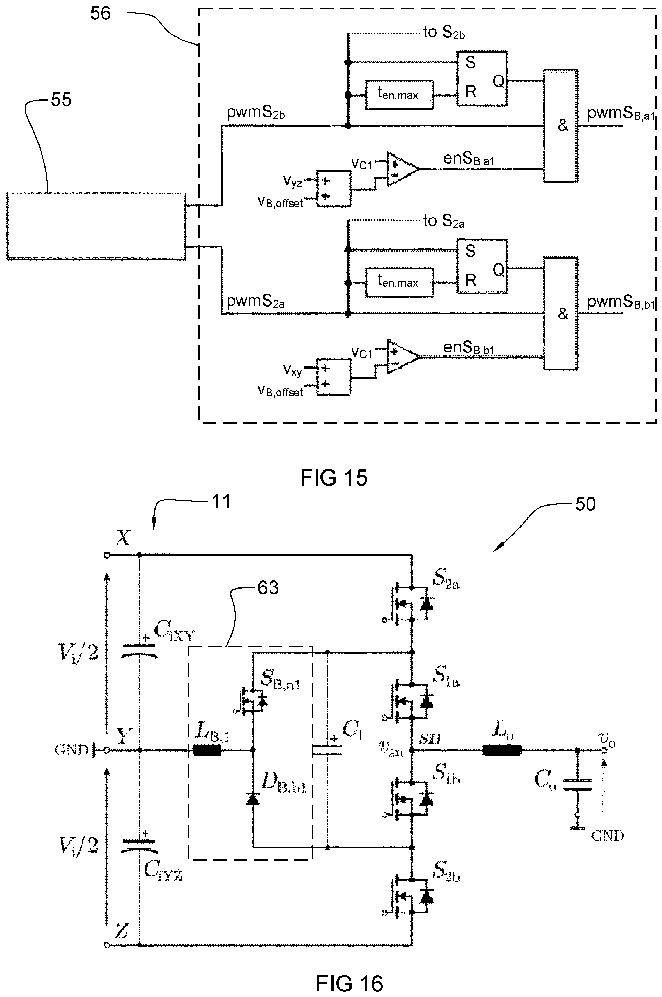

Referring to Fig. 15, in a practical control implementation, the control signals for the balancing switches of the balance booster circuit 53 can be derived from the pulse width modulation (PWM) control signals for the main switches of the FC circuit. The three-level FCC 50 can comprise a main control unit 55 configured to generate the PWM control signals pwmS₂ₐ and pwmS_{2b} for operating switches S₂ₐ and S_{2b} respectively. Additional control logic 56 can be provided to generate control signals pwmS_{B,a1} and pwmS_{B,b1} for operating balancing switches S_{B,a1} and S_{B,b1} respectively. The FCC as described herein can comprise voltage measurement devices 57, 58 configured to sense the voltage across one or more of the DC-bus capacitors and/or across one or more of the flying capacitors as shown in Fig. 14 by the voltages v_{xy}, v_{yz}, v_{C1}. The voltage measuring devices 57, 58 can be coupled to the main control unit 55 and used to derive appropriate PWM control signals.

Due to the occurrence of an FC voltage lift described earlier above and/or of a voltage ripple of the FCs, due to a possibly large output current of the FCC and a relatively small FC capacitance value which is often selected to reduce costs and volume, it can be beneficial to select the discharge voltage level to be higher than Vᵢ/2 in order to avoid simultaneous charging and discharging (i.e. within a same switching period) of the FC which could result in unnecessary large currents in the circuit. In this case, *S*_{*B,a*1} and S_{B,b1} are only enabled when *ν*_{*C*1} > (*Vᵢ*/2 + *ν_{B,offset}*). The offset voltage level *ν_{B,offset}* can be selected based on the occurring voltage ripple of the FC, the permissible currents in the circuit, and the desired voltages limits of the FC voltage *ν*_{*C*1}, e.g. the desired tolerance band around the reference value. Therefore, in a practical application, *S*_{*B,a*1} can be driven by the same PWM signal as *S*_{2b} (and *S*_{*B,b*1} can be driven by the same PWM signal as *S*_{2*a*}) in combination with an additional logic enable signal. The additional logic enable signal can be based on the comparison *ν*_{*C*1} > (*Vᵢ*/2 *+ ν_{B,offset}*), i.e., the drive signals of *S*_{*B,a*1} and *S*_{*B,b*1} are disabled when this condition is not met. The offset voltage level can be selected zero or even negative, achieving tighter/better balancing at the cost of higher currents in the balancing circuit.

Additionally, it is provided that *S*_{*B,a*1} (or *S*_{*B,b*1}) turns on slightly later, and/or turns off slightly earlier, than defined by the PWM signal of *S*_{2*b*} (or *S*_{2*a*}) in order to avoid large current spikes and saturation of the balancing inductor which would be induced by the large voltage build-up during voltage commutation of *S*_{2*b*} (or *S*_{2*a*}) following its tum-on and turn-off. This can easily be implemented in control logic (software, or even analog hardware), for example using delayed tum-on possibly in combination with, or alternatively, an on-time limit *t_{en,max}* for *S*_{*B*,*a*1} and *S*_{*B,b*1} that is smaller than the (minimum) on-time of the respective main semiconductor switch (*S*_{2*b*} and *S*_{2*a*}). A schematic representation of the control signals and control logic is represented in Fig. 15, including voltage offset *ν_{B,offset}* and, in this particular case, a fixed on-time limit *t*_{*en*,*max*}. It will be convenient to note that *t_{en,max}* can also be variably controlled by the main controller 55, for example based on the instantaneous duty-cycle of *S*_{2*b*} and *S*₂*ₐ.*

Advantageously, the balancing semiconductor switches can additionally be operated when charging the FCs, for example by implementing synchronous switching with their anti-parallel diode. This reduces conduction losses, as is known in literature.

Advantageously, the active balance booster circuits of the present disclosure (Group II) comprise one or more freewheeling diodes to release the energy that is accumulated in the balancing inductor during the conduction state of the balancing switches (S_{B,a1} and S_{B,b1}) at turn-off of the switch, avoiding over-voltage when turning off the switch while there is still a current flowing in the balancing inductor. For example, Fig. 16 shows the three-level FCC 50 with active non-dissipative charging/discharging balance booster 63 comprising only one balancing semiconductor switch *S*_{*B,a*1} to discharge *C*₁ when its voltage is too high. Balance booster 63 further comprises a diode *D*_{*B,b*1} which operates as a freewheeling diode and participates in the charging of *C*₁ when its voltage is too low, according to the operating principle described for the Group I balance boosters above. It will be convenient to note that the anode of diode *D*_{*B,b*1} does not need to be connected to the negative terminal of C₁, but can instead be connected to any other suitable voltage node, e.g. to terminal Z (negative DC rail). Alternatively, the (internal) anti-parallel diode of the active balancing switch can operate as the freewheeling diode, e.g. as in the balancing circuit 53 of Fig. 14.

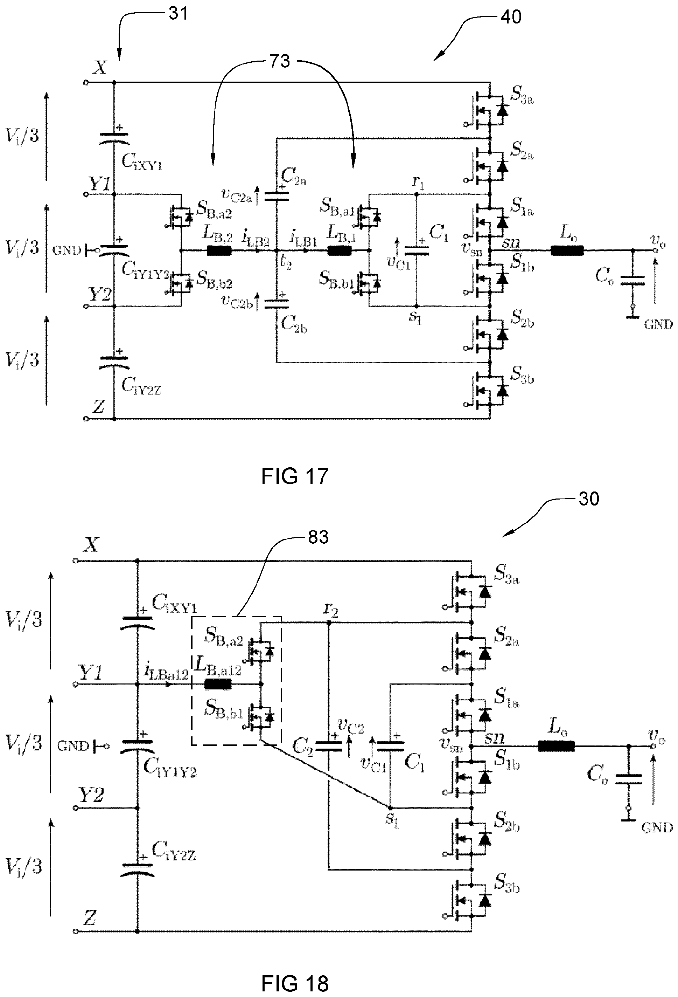

Referring to Fig. 17 the passive balancing circuit 43 of Fig. 13 can be converted into an active balancing circuit 73 by replacing the balancing diodes of circuit 43 with active balancing switches S_{B,a1}, S_{B,b1}, S_{B,a2} and S_{B,a2}, enabling discharging of *C*₁, C₂ₐ, and C_{2b} in addition to the charging of these FC capacitors.

Referring to Fig. 18, the passive balancing circuit 33 of Fig. 8 can be converted into an active balancing circuit 83 by replacing the balancing diodes of circuit 33 with active balancing switches S_{B,a1}, S_{B,b1}. Circuit 83 enables discharging of *C*₁, *C*₂ in addition to the charging of these FC capacitors. Like circuit 43, an additional inductor and active half bridge connected to terminal Y2 can be added to circuit 83.

The voltage balancing circuits for both Group I and Group II advantageously allow a controlled pre-charge of the FCs when the DC-bus voltage is ramped up at turn-on of the converter. For example, referring to Fig. 14, during ramp-up of the DC-bus voltage the following pre-charge scenarios for *C*₁ are possible:
- Balancing switch *S*_{*B,a*1} and main semiconductor switch *S*_{2*b*} are in a continuous on-state during ramp-up while all other semiconductor switches are disabled. Alternatively, balancing switch *S*_{*B,a*1} is in continuous off-state since its anti-parallel diode will automatically reach a forward-bias state when *S*_{2*b*} is in the on-state and voltage *ν*_{*C*1} of *C*₁ is lower than voltage *ν_{yz} of C_{iYZ},* i.e., *ν*_{*C*1} will follow the ramp-up of ν_{yz}. Therefore, pre-charge of *C*₁ can also be obtained using the Group I balance boosters with balancing diodes only.
- Main semiconductor switch *S*_{2*b*} is PWM modulated and balancing switch *S*_{*B,a*1} is in a continuous on-state during ramp-up while all other semiconductor switches are disabled. Alternatively, balancing switch *S*_{*B,a*1} is in continuous off-state since its anti-parallel diode will automatically reach a forward-bias state when *S*_{2*b*} is in the on-state and voltage *ν*_{*C*1} of *C*₁ is lower than voltage *ν_{yz} of* C_{iYZ}.

Alternatively, controlled pre-charge can be achieved in a similar way using balancing switch *S*_{*B,b*1} (or its anti-parallel diode) and main semiconductor switch *S*_{2*a*}, It is alternatively possible to alternate between the case where balancing switch *S*_{*B,a*1} (or its anti-parallel diode) and main semiconductor switch *S*_{2*b*} are used and the case where balancing switch *S*_{*B,b*1} (or its anti-parallel diode) and main semiconductor switch *S*_{2*a*} are used.

Controlled discharge of the FCs when the DC-bus voltage is ramped down at turn-off (intended turn-off or turn-off after an error) of the converter is also possible using the active balancing semiconductor switches of the Group II active non-dissipative charging/discharging balance boosters. For example, in Fig. 14, during ramp-down of the DC-bus voltage the following discharge scenarios for *C*₁ are possible:
- Balancing switch *S*_{*B,a*1} and main semiconductor switch *S*_{2*b*} are in a continuous on-state during ramp-down while all other semiconductor switches are disabled. Alternatively, main semiconductor switch *S*_{2*b*} is in continuous off-state since its anti-parallel diode will automatically reach a forward-bias state when *S*_{*B,a*1} is in the on-state and voltage *ν*_{*C*1} of *C*₁ is higher than voltage *ν_{yz} of C_{iYZ},* i.e., *ν*_{*C*1} will follow the ramp-down of *ν_{yz}.*
- Balancing switch *S*_{*B,a*1} is PWM modulated and main semiconductor switch *S*_{2*b*} is in a continuous on-state during ramp-down while all other semiconductor switches are disabled. Alternatively, main semiconductor switch *S*_{2*b*} can also be in continuous off-state since its anti-parallel diode will automatically reach a forward-bias state when *S*_{*B,a*1} is in the on-state and voltage *ν*_{*C*1} of *C*₁ is higher than voltage *ν_{yz} of* C_{iYZ}.

Alternatively, controlled discharge can be achieved in a similar way using balancing switch *S*_{*B,b*1} and main semiconductor switch *S*_{2*a*} (or its anti-parallel diode). It is alternatively possible to alternate between the case where balancing switch *S*_{*B,a*1} and main semiconductor switch *S*_{2b} (or its anti-parallel diode) are used and the case where balancing switch *S*_{*B,b*1} and main semiconductor switch *S*_{2*a*} (or its anti-parallel diode) are used.

For the Group II active non-dissipative charging/discharging balance boosters, controlled discharge of *C*₁ during ramp-down of the DC-bus voltage at turn-off of the converter can also be obtained when the main semiconductor switches of the FCC bridge (e.g. half-bridges *S*₁*ₐ,S*_{1*b*} and *S*₂*ₐ,S*_{2*b*} in Fig. 14) operate in a switching state where they generate an idle-state output voltage, for example 0 V. In this case, all main semiconductor switches are PWM modulated and the balancing circuit can maintain its regular operating mode as detailed in the above paragraphs.

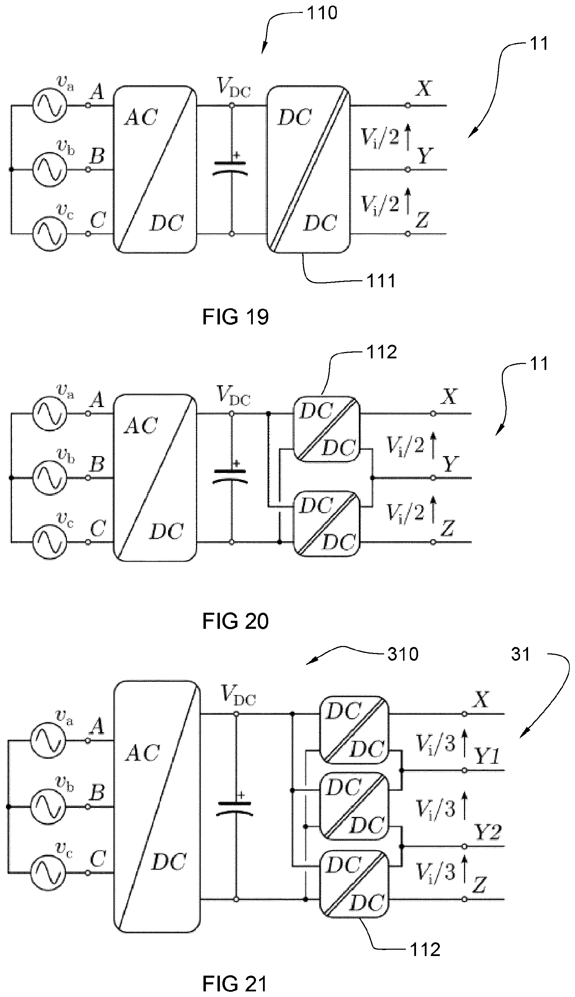

In the presented examples, the balance booster circuits are connected to DC-bus terminals to or from which energy is transferred in order to balance the voltages of the FCs. When the net transferred energy over a longer period of time is non-zero, an increase or decrease of the DC-bus voltages can occur, i.e., particular DC-bus voltages of DC-bus capacitors of a series connection of DC-bus capacitors needed to create the DC-bus terminals. Since in a typical application the DC-bus capacitors have capacitances which are orders of magnitude larger (e.g. 500 times larger) than the FCs, this voltage increase/decrease is very small and therefore has quasi no influence on the normal operation of the FCC. Referring to Figs. 19-21, the converters according to the present disclosure can comprise a power supply 110, 310 for the three-level or four-level DC-bus 11 and 31 respectively. Power supply 110, 310 can be equipped with a series connection of bidirectional DC/DC converters 112 or a multi-output-terminal DC/DC converter 111, preferably isolated DC/DC converters. Power supply 110, 310 can be configured to operate the DC/DC converters 111, 112 to maintain voltage balance of the DC-bus capacitors by circulating energy between these capacitors. This energy circulation can occur at very low power levels since the FC balancing occurs at low levels of energy/power circulation. In case the DC/DC converters of the power supply are not bidirectional, discharge elements (e.g. a series connection of a resistor and controlled semiconductor switch) can be connected between DC-bus terminal pairs to discharge particular DC-bus capacitors when their voltage would become too high due to the FC balancing or small active balancing converters can be connected between DC-bus terminal pairs to circulate energy between DC-bus capacitors to balance their voltage, for example a Rain-Stick converter. The DC/DC converters 111, 112 can be connected at their inputs with an AC/DC converter, which can receive power from a (three-phase) AC grid.

Even though the above examples all rely on the DC-bus capacitors as voltage source for charging the FCs, it will be convenient to note that the balance booster circuits can use a different voltage source instead. By way of example, the converter can comprise an additional DC/DC converter as voltage source and the balance booster circuits for charging the FCs can be configured to make a parallel connection between output terminals of the DC/DC converter and the FC whose voltage is to be balanced (charged).

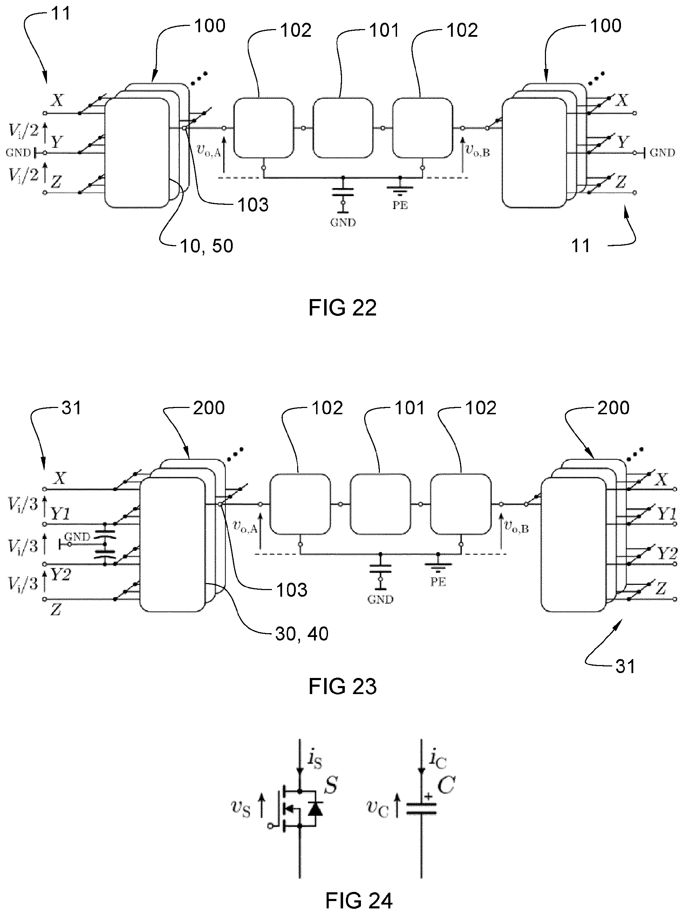

Referring to Fig. 22, the three-level flying capacitor converters 10, 50 as described herein can be utilized as amplifiers 100 for driving a load 101. Each amplifier 100 can comprise or consist of a stack of one or more flying capacitor converters as described herein. Multiple flying capacitor converters 10, 50 can be arranged in parallel in the stack to obtain the amplifier 100. The parallel connected flying capacitor converters can share a common DC-bus 11, 31. The output nodes v₀ of the flying capacitor converters are connected in parallel to obtain an output node 103 of the stack or amplifier 100. The output node v₀ of the FC converter is connected to the load 101 through an optional L-C filter 102. The (common) DC-bus of the FC converters can be connected to a power supply, such as the power supplies described herein in relation to Figs. 19-20. By arranging two such FCC amplifiers 100 symmetrically with respect to load 101, it is possible to apply an AC voltage v_{o,A} - v_{o,B} to load 101 utilizing DC/DC flying capacitor converters with DC output voltages v_{o,A} and v_{o,B}. A same arrangement can be obtained utilizing the four-level FCCs 30, 40 as amplifiers 200, as shown in Fig. 23, or any higher level flying capacitor converters. The flying capacitor converters in each stack or amplifier 100, 200 can be operated in parallel (simultaneous operation) or in an interleaved mode to provide an output v_{0,A} or v_{0,B}.

The FCCs can be part of a hybrid converter topology, such as a combined FC and neutral-point-clamped (NPC) converter structure. The FCCs with voltage balancing circuits as described herein can be used in MRI amplifiers, motor drive systems and in DC/DC converters for photo-voltaic applications.

In the following, simulation examples are provided that illustrate the operating principle and effectiveness of the Group I and Group II non-dissipative balance boosters. For each example, the output *Lₒ-Cₒ* filter and the load terminals of the FCC are replaced by a controlled current source *iₒ* connected between the switch-node terminal *sn* and the DC-bus midpoint which is referred to as ground GND. Also, the DC-bus capacitors are replaced by controlled voltage sources. Using these conditions, the FC balancing mechanisms can be clearly explained neglecting the effects of the in- and output filters on the waveforms. Furthermore, it shall be noted that the switch-node voltage *νₛₙ* is the voltage between terminal *sn* and ground GND. For each example below, the voltage and current conventions for the semiconductor switches (here Metal-Oxide Field Effect Transistors; MOSFETs) and capacitors are as indicated in Fig. 24.

### Comparative simulation example 1

The circuit used in simulation example 1 is shown in Fig. 25A and comprises a three-level FCC with flying capacitor *C*₁ = 60 µF and no voltage balancing circuit (balance booster) used.
The purpose of simulation example 1 is to illustrate the imbalance problem in case no balance booster is used. The simulation is performed at the following conditions:
- *Vᵢ* = 2400 V, *V_{CiXY}* = 1200 V, *V_{CiYZ}* = 1200 V; DC-bus voltage (*Vᵢ = V_{CiXY} + V_{CiYZ}*).
- *V*ₒ = 800 V = *Vₛₙ*; with *Vₒ* the (moving) average value of the output voltage *νₒ* and *V*ₒ being equal to the (moving) average value *Vₛₙ* of the switch-node voltage νₛₙ.
- *iₒ* = *Iₒ* = 100 A; output current (constant current source).
- *f_{SW}* = 30 kHz; switching frequency of the main semiconductor switches.
- *T_{SIM}* = 0.01 s; total simulation time.
The resulting waveforms are shown in Figs. 25B-25I, where:
- Fig. 25B shows:
   ∘ *V_{CiXY}* and *V_{CiYZ}:* voltages of the two DC-bus voltage sources.
   ∘ *Vᵢ*: total DC-bus voltage (*Vᵢ = V_{CiXY} + V_{CiYZ}*).
   ∘ *Vₒ*: (moving) average value of the output voltage.
   ∘ *iₒ*: output current (here a constant current source).
- Fig. 25C shows:
   ∘ *d*_{*s*1*a*} = *dₛ₂ₐ = Vₒ*/*Vᵢ* + 1/2; duty-cycles of the upper two main semiconductor switches *S*_{1*a*} and *S*_{2*a*}. Note that the duty-cycles of the lower two main semiconductor switches *S*_{1*b*} and *S*_{2*b*} are (not shown) *d*_{*S*1*b*} = 1 - *d*_{*S*1}*ₐ, d*_{*S*2*b*} = 1 - *d*_{*S*2}*ₐ.*
- Fig. 25D and Fig. 25E (zoom of two switching periods around time instant 0.01 s) show:
   ∘ *νₛₙ*: switch node voltage.
   ∘ *Vₛₙ*: (moving) average value of the switch-node voltage (*νₛₙ* = *νₒ*)*.*
- Fig. 25F and Fig. 25G (zoom of two switching periods around time instant 0.01 s) show:
   ∘ *ν*_{*C*1}: FC voltage. It can be seen that *ν*_{*C*1} contains a ripple due to the usage of a capacitor *C*₁.
   ∘ *V*_{*C*1}*_{,ref}:* reference FC voltage (to be followed); *V*_{*C*1}*_{,ref} = Vᵢ*/*2.*
- Fig. 25H and Fig. 25I (zoom of two switching periods around time instant 0.01 s) show:
   ∘ *i*_{*C*1}: FC current.

In Fig. 25G, the ripple of the FC voltage *ν*_{*C*1} due to the current *i*_{*C*1} (see Fig. 25I) flowing in capacitor *C*₁ is visible. Due to circuit imperfections and non-idealities, the average value of *ν*_{*C*1} is drifting away from its reference value *V*_{*C*1}*_{,ref}(= Vᵢ*/2) as can be seen in Fig. 25F leading to a growing voltage imbalance which is also visible in the switch-node voltage waveform *νₛₙ* of Fig. 25D and Fig. 25E. The result is that the harmonic components of *νₛₙ* start to appear at the switching frequency *f_{SW}* and multiples thereof, as can be seen in Fig. 25J (captured at time instant 0.01 s). This is not desired since (i) it increases the required filtering effort and therewith limits the amplifier's bandwidth and (ii) it causes over-voltage of the main semiconductor switches. These are both effects that can become worse as FC voltage imbalance is not under control and can potentially become very large, potentially leading to destruction of the semiconductor switches due to over-voltage and making an FCC without a voltage balancing circuit practically unusable in many applications.

### Invention simulation example 2

The circuit used in simulation example 2 is shown in Fig. 26A and comprises a three-level FCC and an active non-dissipative balance booster, with two balancing switches S_{B,a1} and *S*_{*B,b*1} that include anti-parallel diodes. Flying capacitor *C*₁ = 60 µF.

The purpose of this simulation example 2 is to illustrate the discharging mechanism provided by the active balance boosters of the present disclosure by actively operating the balancing switches.

The simulation was performed at the following conditions:
- *Vᵢ* = 2400 V, *V_{CiXY}* = 1200 V, V*_{CiYZ}* = 1200 V; DC-bus voltage (*Vᵢ = V_{CiXY} + V_{CiYZ}*).
- *V*ₒ = 800 V = *Vₛₙ*; (moving) average value of the output voltage equal to the (moving) average value of the switch-node voltage.
- *iₒ* = *Iₒ* = 100 A; output current (constant current source).
- *f_{SW}* = 30 kHz; switching frequency of the main semiconductor switches.
- *T_{SIM}* = 0.001 s; total simulation time.

In this simulation example, only the discharging mechanism of the FC *C*₁ via the balancing switches *S*_{*B,a*1} and *S*_{*B,b*1} is illustrated and the control logic shown in Fig. 15 is utilized. The initial (i.e. at the start of the simulation) FC voltage *ν*_{*C*1,*init*} is set to the reference value added with an offset of +30V (ν_{*C*1,}*ᵢₙᵢₜ = V*_{*C*1*,ref*} + 30 V = Vᵢ/2 + 30 V = 1200 V + 30 V = 1230 V). Switching of *S*_{*B,a*1} and *S*_{*B,b*1} occurs synchronously with the main semiconductor switches *S*_{2*b*} and *S*_{2*a*} respectively, according to the control diagram of Fig. 15 selecting *ν_{B,offset}* = 0 V and *t_{en,max}* = 2.6 µs. The inductance value of the balance inductor *L*_{*B*,1} is 2 µH.

The resulting waveforms are shown in Figs. 26B-26M, where:
- Fig. 26B and Fig. 26C (enlarged views of two switching periods around time instant 0.0002 s) show:
   ∘ *νₛₙ*: the switch-node voltage.
   ∘ *Vₛₙ*: (moving) average value of the switch-node voltage (*νₛₙ* = *νₒ*)*.*
- Fig. 26D and Fig. 26E (enlarged views of two switching periods around time instant 0.0002 s) show:
   ∘ *ν*_{*C*1}: FC voltage. It can be seen that *ν*_{*C*1} starts at *ν*_{*C*1,}*ᵢₙᵢₜ = V*_{*C*1*,ref*} + 30 V = Vᵢ/2 + 30 V = 1200 V + 30 V = 1230 V and decreased to *V*_{*C*1*,ref*} due to the discharging mechanism being active.
   ∘ *V*_{*C*1}*_{,ref}:* reference FC voltage (to be followed); *V*_{*C*1}*_{,ref} = Vᵢ*/*2.*
- Fig. 26F and Fig. 26G (enlarged views of two switching periods around time instant 0.0002 s) show:
   ∘ *i*_{*C*1}: FC current which comprises superimposed discharging currents.
- Fig. 26H and Fig. 26I (enlarged views of two switching periods around time instant 0.0002 s) show:
   ∘ i_{*SBa*1}: current of the balancing switch *S*_{*B,a*1}.
   ∘ *s*_{*Ba*1}*:* PWM signal of the balancing switch *S*_{*B,a*1}.
   ∘ *s*₂*_{b}:* PWM signal of the main semiconductor switch *S*₂*_{b}.*
- Fig. 26J and Fig. 26K (enlarged views of two switching periods around time instant 0.0002 s) show:
   ∘ *i*_{*SBb*1}: current of the balancing switch *S*_{*B,b*1}*.*
   ∘ *s*_{*Bb*1}: PWM signal of the balancing switch *S*_{*B,b*1}*.*
   ∘ *s*_{2*a*}: PWM signal of the main semiconductor switch *S*_{2*a*}.
- Fig. 26L and Fig. 26M (enlarged views of two switching periods around time instant 0.0002 s) show:
   o *i*_{*LB*1}: current in the balancing inductor.

In Figs. 26H-26K, the currents *i*_{*SBa*1} and *i*_{*SBb*1} in the balancing switches are visible which cause discharging of the FC C₁ as indicated in Fig. 26E where *ν*_{*C*1} is steadily reduced due to *i*_{*SBa*1} and *i*_{*SBb*1} causing a reduction of the average value of *ν*_{*C*1}*.* This is also clearly noticeable on a larger timescale in Fig. 26D where *ν*_{*C*1} converges towards its reference value *V*_{*C*1}*_{,ref}.* Figs. 26H and 26J show *i*_{*SBa*1} and *i*_{*SBb*1} on the larger timescale and are significantly low, which also can be seen in Figs. 26F and 26G where the contribution of *i*_{*SBa*1} and *i*_{*SBb*1} to the FC current *i*_{*C*1} is very little. Therefore, one can conclude that the disclosed balancing circuit is capable of effectively balancing (i.e. in this particular example 'discharging') the voltage of the FC at low additional balancing currents and thus at low additional losses in the circuit and thus the additional balancing hardware can have low current ratings which provides a cost-effective solution and makes the FCC practically usable in many applications.

### Invention simulation example 3

The same FCC circuit of simulation example 2 is used. In this example however, the two balancing switches S_{B,a1} and S_{B,b1} are disabled, and only diode operation of the balance booster is possible. The purpose of simulation example 3 is to illustrate the charging mechanism of the balance boosters of the present disclosure.
The simulation was performed at the following conditions:
- DC-bus voltage (*Vᵢ = V_{CiXY} + V_{CiYZ})* is rising from *Vᵢ(t =* 0s) = 2400 V to *Vᵢ*(*t =* 1ms) = 2420 V.
- *V*ₒ = 800 V = *Vₛₙ*; (moving) average value of the output voltage equal to the (moving) average value of the switch-node voltage.
- *iₒ* = *Iₒ* = 100 A; output current (constant current source).
- *f_{SW}* = 30 kHz; switching frequency of the main semiconductor switches.
- *T_{SIM}* = 0.001 s; total simulation time.
In this simulation example, only the charging mechanism of the FC C₁ via the anti-parallel diodes of balancing switches *S*_{*B,a*1} and *S*_{*B,b*1} is illustrated by letting the DC-bus voltage (*Vᵢ = V_{CiXY} + V_{CiYZ})* rise from *Vᵢ*(*t* = 0s) = 2400 V to *Vᵢ*(*t* = 1ms) = 2420 V and by disabling the PWM signals of *S*_{*B,a*1} and *S*_{*B,b*1} (resulting in diode operation of the balance booster). Conduction of the anti-parallel diodes of *S*_{*B,a*1} and *S*_{*B,b*1} occurs synchronously with the main semiconductor switches *S*_{2b} and S₂ₐ respectively, according to the explanation of the charging mechanism of the passive non-dissipative charging balance boosters (Group I) above. In this example, the drive PWM signals (*pwmS*_{*B,a*1,}*pwmS*_{*B,b*1}) of *S*_{*B,a*1} and *S*_{*B,b*1} are thus disabled in the control diagram of Fig. 15. The inductance value of the balance inductor *L*_{*B*,1} is 2 µH.
The resulting waveforms are shown in Figs. 27A-27J, where:
- The resulting switch node voltage is qualitatively the same as in Fig. 26B and Fig. 26C of simulation example 2.
- Fig. 27A and Fig. 27B (enlarged view of two switching periods around time instant 0.0002 s) show:
   ∘ *ν*_{*C*1}: FC voltage. It can be seen that the reference voltage *V*_{*C*1}*_{,ref} = Vᵢl2* of FC *C*₁ rises from *V*_{*C*1*,ref*}(*t =* 0s) *= Vᵢ*(*t =* 0s)/2 = 2400/2 = 1200 V to *V*_{*C*1*,ref*}(*t* = 1ms) = *Vᵢ*(*t* = 1ms)/2 = 2420/2 = 1210 V. A purpose of this simulation example is to show that the balancing circuit makes *ν*_{*C*1} follow *V*_{*C*1*,ref*} by charging *C*₁.
   ∘ *V*_{*C*1}*_{,ref}:* reference FC voltage (to be followed); *V*_{*C*1}*_{,ref} = Vᵢ*/*2.*
- Fig. 27C and Fig. 27D (enlarged view of two switching periods around time instant 0.0002 s) show:
   ∘ *i*_{*C*1}: FC current which now comprises superimposed charging currents.
- Fig. 27E and Fig. 27F (enlarged view of two switching periods around time instant 0.0002 s) show:
   ∘ i_{*SBa*1}: current of the balancing switch *S*_{*B,a*1} (anti-parallel diode conducts current).
   ∘ *s*_{*Ba*1}*:* PWM signal of the balancing switch *S*_{*B,a*1} (disabled).
   ∘ *s*₂*_{b}:* PWM signal of the main semiconductor switch *S*₂*_{b}.*
- Fig. 27G and Fig. 27H (enlarged view of two switching periods around time instant 0.0002 s) show:
   ∘ *i*_{*SBb*1}: current of the balancing switch *S*_{*B,b*1} (anti-parallel diode conducts current).
   ∘ *s*_{*Bb*1}: PWM signal of the balancing switch *S*_{*B,b*1} (disabled).
   ∘ *s*_{2*a*}: PWM signal of the main semiconductor switch *S*_{2*a*}.
- Fig. 27I and Fig. 27J (zoom of two switching periods around time instant 0.0002 s) show:
   ∘ *i*_{*LB*1}: current in the balancing inductor.

In Figs. 27E-27H, the currents *i*_{*SBa*1} and *i*_{*SBb*1} in the anti-parallel diodes of *S*_{*B,a*1} and *S*_{*B,b*1} (remind that the PWM signals of *S*_{*B,a*1} and *S*_{*B,b*1} are disabled, resulting in diode operation only) are visible which cause charging of the FC *C*₁ as indicated in Fig. 27B where *ν*_{*C*1} is steadily increasing due to *i*_{*SBa*1} and *i*_{*SBb*1} causing an increase of the average value of *v*_{*C*1}*.* This is also clearly noticeable on a larger timescale in Fig. 27A where *ν*_{*C*1} follows its reference value *V_{C1,ref}.* Figs. 27E and 27G show *i*_{*SBa*1} and *i*_{*SBb*1} on the larger timescale and are significantly low, which also can be seen in Figs. 27C and 27D where the contribution of *i*_{*SBa*1} and *i*_{*SBb*1} to the FC current *i*_{*C*1} is very little. Therefore, one can conclude that the disclosed balancing circuit is capable of effectively balancing (i.e. in this particular example 'charging') the voltage of the FC at low additional balancing currents and thus at low additional losses in the circuit and thus the current ratings of the additional balancing hardware can be low which provides a cost-effective solution and makes the FCC practically usable in many applications.

### Invention simulation example 4

- The same FCC circuit of simulation example 2 is used.
The purpose of simulation example 4 is to perform the same simulation as in comparative simulation example 1, but now with the FCC including the balance booster circuit to prove its effectiveness.

The simulation was performed at identical conditions as comparative simulation example 1.
Switching of *S*_{*B,a*1} and *S*_{*B,b*1} occurs synchronously with the main semiconductor switches *S*_{2b} and S₂ₐ respectively, according to the control diagram of Fig. 15 selecting *ν_{B,offset} =* 0 V and *t_{en,max}* = 5 µs. The inductance value of the balance inductor *L*_{*B*,1} is 2 µH.

The resulting waveforms are shown in Figs. 28A-28L, where:
- *V_{CiXY}, V_{CiYZ}, Vᵢ, Vₒ, iₒ, dₛ₁ₐ, d_{S2a}* are the same as in comparative simulation example 1.
- Fig. 28A and Fig. 28B (enlarged view of two switching periods around time instant 0.01 s) show:
   ∘ *νₛₙ*: switch node voltage.
   ∘ *Vₛₙ*: (moving) average value of the switch-node voltage (*νₛₙ* = *νₒ*)*.*
- Fig. 28C and Fig. 28D (enlarged view of two switching periods around time instant 0.01 s) show:
   ∘ *ν*_{*C*1}: FC voltage.
   ∘ *V*_{*C*1}*_{,ref}:* reference FC voltage (to be followed); *V*_{*C*1}*_{,ref} = Vᵢ*/*2.*
- Fig. 28E and Fig. 28F (enlarged view of two switching periods around time instant 0.01 s) show:
   ∘ *i*_{*C*1}: FC current which comprises superimposed charging and discharging currents.
- Fig. 28G and Fig. 28H (enlarged view of two switching periods around time instant 0.01 s) show:
   ∘ i_{*SBa*1}: current of the balancing switch *S*_{*B,a*1}*.*
   ∘ *s*_{*Ba*1}*:* PWM signal of the balancing switch *S*_{*B,a*1}.
   ∘ *s*₂*_{b}:* PWM signal of the main semiconductor switch *S*₂*_{b}.*
- Fig. 28I and Fig. 28J (enlarged view of two switching periods around time instant 0.01 s) show:
   ∘ *i*_{*SBb*1}: current of the balancing switch *S*_{*B,b*1}*.*
   ∘ *s*_{*Bb*1}: PWM signal of the balancing switch *S*_{*B,b*1}*.*
   ∘ *s*_{2*a*}: PWM signal of the main semiconductor switch *S*_{2*a*}.
- Fig. 28K and Fig. 28L (zoom of two switching periods around time instant 0.01 s) show:
   ∘ *i*_{*LB*1}: current in the balancing inductor.
In Figs. 28G-28J, the currents *i*_{*SBa*1} and *i*_{*SBb*1} in the balancing switches are visible which cause the voltage *ν*_{*C*1} to follow its reference value *V*_{*C*1*,ref*} as can be seen in Fig. 28C and in the enlarged view of Fig. 28D. Simultaneous charging and discharging (i.e. within a same switching period) of the FC occurs due to the relatively large ripple of voltage *ν*_{*C*1}, and due to a low offset voltage selection of *ν_{B,offset}* = 0 V (see control diagram of Fig. 15) keeping voltage *ν*_{*C*1} tightly locked within a relatively narrow band around *V_{C1,ref},* resulting in a low value of the harmonic component of *νₛₙ* at the switching frequency *f_{SW}* as can be seen in Fig. 28M, i.e., the harmonic amplitude at *f_{SW}* (30 kHz) is close to the value of the ideal case. Figs. 28G and 28I show *i*_{*SBa*1} and *i*_{*SBb*1} on the larger time-scale and are significantly low, which also can be seen in Figs. 28E and 28F where the contribution of *i*_{*SBa*1} and *i*_{*SBb*1} to the FC current *i*_{*C*1} is very little. Therefore, one can conclude that the disclosed balancing circuit is capable of effectively balancing the voltage of the FC (i.e. within a relatively narrow band around *V*_{*C*1}*_{,ref})* at low additional balancing currents and thus at low additional losses in the circuit and thus the current ratings of the additional balancing hardware can be low which provides a cost-effective solution and makes the FCC practically usable in many applications.

By comparing Figs. 25J and 28M showing the DC component (i.e. 800V) and amplitude of the harmonic components of the switch-node voltage *νₛₙ* for comparative simulation example 1 and simulation example 4, respectively, at simulation time 0.01 s, it can be concluded that the voltage balancing circuits of the present disclosure are capable of obtaining a harmonic component of *νₛₙ* at the switching frequency *f_{SW}* (30 KHz) with very low harmonic amplitude, and almost five times smaller than the amplitude of the harmonic component at the switching frequency *f_{SW}* for comparative simulation example 1.

### Invention simulation example 5

The circuit used in simulation example 5 is shown in Fig. 29A and comprises a four-level FCC. FC *C*₁ = 60 µF. FC C₂ = 30 µF. The FCC comprises an active non-dissipative balance booster according to aspects of the present disclosure, comprising four balancing switches that include anti-parallel diodes. The switching frequency of the main semiconductor switches of the FCC *f_{SW}* = 30 kHz. To keep C₁ balanced, switching of *S*_{*B,a*1} and *S*_{*B,b*1} occurred synchronously with the main semiconductor switches *S*_{2*a*}, *S*₂*_{b}, S*₃*_{a,} S*_{3*b*} according to the control diagram of Fig. 29B selecting *ν_{B,offset}* = 0 V and *t_{en,max}* = 5 µs. To keep *C*₂ balanced, switching of *S_{B,a2}* and *S_{B,b2}* occurred synchronously with the main semiconductor switches *S*₃*ₐ, S*_{3*b*} according to the control diagram of Fig. 29B selecting *ν_{B,offset}* = 0 V and *t_{en,max}* = 5 µs. The inductance value of the balance inductors *L*_{*B,a*12} and *L*_{*B,b*12} is 2 µH.

The purpose of this simulation example was to illustrate the effectiveness of the balance booster circuits of the present disclosure for the following rather general and challenging operating conditions, which are graphically shown in Fig. 29C:
- The DC-bus voltage *Vᵢ* decreases in the first interval of the 10ms simulation period from *Vᵢ*(*t =* 0s) = 2400 V to *Vᵢ*(*t* = 5ms) = 2200 V and increases in the second interval of the 10ms simulation period from *Vᵢ*(*t* = 5ms) = 2200 V to *Vᵢ*(*t* = 10ms) = 2400 V. Note that in Fig. 29C, the voltages *V_{X}* and *V_{Y}* represent the voltage between the positive DC-bus terminal X and ground *GND,* and between the negative DC-bus terminal Y and ground *GND,* respectively, where *GND* **is the** DC-bus midpoint in these examples. It thus can be said that *Vᵢ = V_{X} -* V_{Y}.
- The moving average value *V*ₒ of the output voltage and output current *iₒ* follow a 200 Hz sinusoidal trajectory with amplitudes of *V_{o,ampl}* = 1000 V and *I_{o,ampl} =* 100 A respectively (*Vₒ* and *iₒ* are in-phase and thus draw active power from the DC-bus). As a result of the sinusoidal output voltage, the modulation index (and thus the duty-cycles of the main semiconductor switches) will change within a wide range.

A purpose of this simulation example was to show that the disclosed balance booster circuits are capable of operating under widely varying duty-cycles and fast changing DC-bus voltages, which do require the FC voltages to follow this change in order to maintain voltage balance in the FCC.
The resulting waveforms are shown in Figs. 29D-29J, where:
- Fig. 29D shows *d*_{*s*1}*ₐ = d*_{*s*2}*ₐ = d*_{*s*3*a*} = *Vₒ*/*Vᵢ* + 1/2 the duty-cycles of the upper three main semiconductor switches *S*₁*ₐ, S*_{2*a*} and *S*_{3*a*}. Note that the duty-cycles of the lower three main semiconductor switches *S*₁*_{b}, S*_{2*b*} and *S*_{3*b*} (not shown) are *d*_{*S*1*b*} = 1 - *d*_{*S*1a}, *d*_{*S*2*b*} = 1 - *d*_{*S*2}*ₐ,d*_{*S*3*b*} = 1 - *d*_{*S*3}*ₐ.*
- Fig. 29E shows *νₛₙ*: switch node voltage and *Vₛₙ*: (moving) average value of the switch-node voltage (*νₛₙ* = *νₒ*)*.*
- Figs. 29F-29G show:
   ∘ *ν*_{*C*1}, *ν*_{*C*2}: FC voltages.
   ∘ *V*_{*C*1}*_{,ref}, V*_{*C*2,}*_{ref}:* reference FC voltages (to be followed); *V*_{*C*1}*_{,ref} = Vᵢ*/3*, V*_{*C*2*,ref*} = 2*Vᵢ*/3.
- Fig. 29H shows *i*_{*C*1}: the FC C₁ current which comprises superimposed charging and discharging currents. The current through FC C₂ was observed to be qualitatively similar to the current of FC C₁.
- Figs. 29I and 29J show *i*_{*SBa*1}, *i*_{*SBb*2}: the currents through the balancing switches *S*_{*B,a*1} *, S*_{*B,b*2} respectively. The current through switch S_{B,a2} was observed to be qualitatively similar to the current through switch S_{B,b2}, but time-shifted over 0.0025 ms. The current through switch S_{B,b1} was observed to be qualitatively similar to the current through switch S_{S,a1}, but time-shifted over 0.0025 ms.

In Figs. 29I and 29J, a selection of the currents through the balancing switches are visible which cause the voltages *ν*_{*C*1}, *ν*_{*C*2} to follow their reference values *V*_{*C*1,}*_{ref}, V*_{*C*2*,ref*} as can be seen in Figs. 29F-29G. Therefore, one can conclude that the voltage balancing circuit according to the present disclosure is capable of effectively balancing the voltage of the FC within a relatively narrow band around the reference voltage levels at low additional balancing currents and thus at low additional losses in the circuit. As a result, the current ratings of the additional balancing hardware can be low which provides a cost-effective solution and makes the FCC practically usable in many applications.

## Claims

1. Electrical converter (50), comprising:
two first nodes (X, Z) and a switch node (sn),
a flying capacitor circuit comprising at least one flying capacitor (C₁, C₂) and a plurality of first switching devices (S₁ₐ, S_{1b}, S₂ₐ, S_{2b}, S₃ₐ, S_{3b}) operable to convert between a first signal at the first nodes and a second signal at the switch node,
a balancing circuit (53, 63, 73, 83) for balancing a voltage of the at least one flying capacitor, and a plurality of DC-bus voltage sources (C_{iXY}, C_{iYZ}, C_{iXY1}, C_{iY1Y2}, C_{iY2Z}) connected in series between the two first nodes (X, Z),
wherein the balancing circuit comprises an inductor (L_{B,1}) and at least one second switching device (D_{B,a1}, D_{B,a2}, D_{B,b1}, D_{B,b2}, S_{B,a1}, S_{B,a2}, S_{B,b1}, S_{B,b2}) connected to a terminal of the at least one flying capacitor, wherein the at least one second switching device comprises an actively operated switching device (S_{B,a1}, S_{B,a2}, S_{B,b1}, S_{B,b2}) configured to connect the at least one flying capacitor in parallel with a DC-bus voltage source (C_{iXY}, C_{iYZ}, C_{iXY1}, C_{iY1Y2}, C_{iY2Z}) or in parallel with another capacitor of the at least one flying capacitor for discharging the at least one flying capacitor, wherein the inductor and the at least one flying capacitor are connected in series when the at least one switching device is configured to connect the at least one flying capacitor in parallel with the voltage source or the another capacitor, and wherein the inductor (L_{B,1}) is connected to an intermediate node (Y, Y1, Y2) between the plurality of series connected DC-bus voltage sources,
**characterised in that** the electrical converter comprises a control unit (55) configured to implement time differentiation logic in order to operate the actively operated switching device (S_{B,a1}, S_{B,a2}, S_{B,b1}, S_{B,b2}) to discharge the at least one flying capacitor with a time delay compared to synchronous operation with a respective one of the plurality of first switching devices (S₁ₐ, S_{1b}, S₂ₐ, S_{2b}, S₃ₐ, S_{3b}), wherein the time delay is configured to:
delay turn on of the actively operated switching device with respect to a turn-on instant of the respective one of the plurality of first switching devices (S₁ₐ, S_{1b}, S₂ₐ, S_{2b}, S₃ₐ, S_{3b}), and/or
reduce an on-time of the actively operated switching device (S_{B,a1}, S_{B,a2}, S_{B,b1}, S_{B,b2}) compared to an on-time of the respective one of the plurality of first switching devices (S₁ₐ, S_{1b}, S₂ₐ, S_{2b}, S₃ₐ, S_{3b}).

2. Electrical converter of claim 1, wherein a current path created when the at least one second switching device is in a conduction state is free from dissipative electrical elements.

3. Electrical converter of claim 1 or 2, wherein the at least one second switching device comprises a diode (D_{B,a1}, D_{B,,a2}, D_{B,b1}, D_{B,b2}) configured to connect the at least one flying capacitor in parallel with a DC-bus voltage source or the another capacitor.

4. Electrical converter of any one of the preceding claims, further comprising at least one voltage measurement device (57, 58) coupled to the control unit (55) and configured to sense a voltage across the at least one flying capacitor and/or a DC-bus voltage source.

5. Electrical converter of any one of the preceding claims, wherein the control unit (55) is configured to add an offset voltage level (*v_{B,offset}*) to a reference voltage level of the at least one flying capacitor to obtain a threshold voltage, wherein the control unit is configured to enable operation of the actively operated switching device based on a comparison between a voltage of the at least one flying capacitor and the threshold voltage.

6. Electrical converter of any one of the preceding claims, wherein the flying capacitor circuit comprises a first flying capacitor cell (402) and a second flying capacitor cell (401) cascaded between the first nodes (X, Z) and the switch node (sn), wherein the balancing circuit (43) comprises a first balancing circuit configured to balance a voltage of a capacitor (C₂ₐ, C_{2b}) of the first flying capacitor cell (402).

7. Electrical converter of claim 6, wherein the first flying capacitor cell (402) comprises a plurality of series connected capacitors (C₂ₐ, C_{2b}), and wherein the balancing circuit (43) comprises a second balancing circuit comprising a further inductor (L_{B,1}) and a second switch (D_{B,a1}, D_{B,b1}, S_{B,a1}, S_{B,b1}) of the at least one second switching device configured to connect a capacitor (C₁) of the second flying capacitor cell (401) in parallel with at least one of the plurality of series connected capacitors (C₂ₐ, C_{2b}) of the first flying capacitor cell (402), preferably wherein at least one capacitor of the plurality of series connected capacitors of the first flying capacitor cell (402) and the capacitor (C₁) of the second flying capacitor cell (401) are configured to have a same reference voltage.

8. Electrical converter of any one of the preceding claims, wherein each of the DC-bus voltage sources is configured to have a voltage corresponding to a reference voltage of the at least one flying capacitor.

9. Electrical converter of any one of the preceding claims, the intermediate node has a voltage corresponding to a reference voltage of the at least one flying capacitor.

10. Electrical converter of claim 9, wherein each of the DC-bus voltage sources is a DC-bus capacitor.

11. Electrical converter of claim 10, further comprising a DC/DC converter (111, 112), wherein the DC/DC converter is configured to balance a voltage of the plurality of bus capacitors, preferably wherein the DC/DC converter is a bidirectional DC/DC converter, preferably comprising a plurality of the DC/DC converter having outputs connected in series between the first nodes, each of the plurality of DC/DC converters configured to balance a voltage of a corresponding one of the plurality of series connected bus capacitors.

12. Electrical converter of any one of the claims 1 to 9, wherein a DC-bus voltage source comprises a DC/DC converter, preferably a bidirectional DC/DC converter, wherein the DC/DC converter comprises output terminals and wherein the at least one second switching device is configured to connect the at least one flying capacitor in parallel with the output terminals of the DC/DC converter.

13. Amplifier system, comprising a first stack (100, 200) of electrical converters according to any one of the preceding claims, wherein the electrical converters of the first stack are connected in parallel, preferably wherein corresponding first nodes (X, Z) of the electrical converters of the first stack are connected to a common DC-bus (11, 31).

14. Amplifier system of claim 13, wherein the electrical converters of the first stack are operated in interleaved mode.

15. Amplifier system of claim 13 or 14, further comprising a second stack of electrical converters according to any one of the claims 1 to 12, wherein the electrical converters of the second stack are connected in parallel, and wherein output nodes (103) of the first stack and of the second stack are symmetrically connected to a load (101).

## Patentansprüche

1. Elektrischer Wandler (50), umfassend:
zwei erste Knoten (X, Z) und ein Schaltknoten (sn),
eine Flying-Capacitor-Schaltung, die mindestens einen fliegenden Kondensator (C₁, C₂) und eine Vielzahl von ersten Schaltvorrichtungen (S₁ₐ, S_{1b}, S₂ₐ, S_{2b}, S₃ₐ, S_{3b}) umfasst, die dazu betriebsfähig sind, zwischen einem ersten Signal an dem ersten Knoten und einem zweiten Signal an dem Schaltknoten zu wandeln,
eine Ausgleichsschaltung (53, 63, 73, 83) zum Ausgleichen einer Spannung des mindestens einen fliegenden Kondensators und einer Vielzahl von Gleichstrombusspannungsquellen (C_{iXY}, C_{iYZ}, C_{iXY1}, C_{iY1Y2}, C_{iY2Z}), die zwischen den zwei ersten Knoten (X, Z) in Reihe verbunden sind,
wobei die Ausgleichsschaltung einen Induktor (L_{B,1}) und mindestens eine zweite Schaltvorrichtung (D_{B,a1}, D_{B,a2}, D_{B,b1}, D_{B,b2}, S_{B,a1}, S_{B,a2}, S_{B,b1}, S_{B,b2}) umfasst, die mit einem Anschluss des mindestens einen fliegenden Kondensators verbunden ist, wobei die mindestens eine zweite Schaltvorrichtung eine aktiv betriebene Schaltvorrichtung (S_{B,a1}, S_{B,a2}, S_{B,b1}, S_{B,b2}) umfasst, die dazu konfiguriert ist, zum Entladen des mindestens einen fliegenden Kondensators den mindestens einen fliegenden Kondensator parallel mit einer Gleichstrombusspannungsquelle (C_{iXY}, C_{iYZ}, C_{iXY1}, C_{iY1Y2}, C_{iY2Z}) oder parallel mit einem anderen Kondensator des mindestens einen fliegenden Kondensators zu verbinden, wobei der Induktor und der mindestens eine fliegende Kondensator in Reihe verbunden sind, wenn die mindestens eine Schaltvorrichtung dazu konfiguriert ist, den mindestens einen fliegenden Kondensator parallel mit der Spannungsquelle oder dem anderen Kondensator zu verbinden, und wobei der Induktor (L_{B,1}) mit einem Zwischenknoten (Y, Y1, Y2) zwischen der Vielzahl von in Reihe verbundenen Gleichstrombusspannungsquellen verbunden ist,
**gekennzeichnet dadurch, dass** der elektrische Wandler eine Steuerungseinheit (55) umfasst, die dazu konfiguriert ist, eine Zeitdifferenzierungslogik zu implementieren, um die aktiv betriebene Schaltvorrichtung (S_{B,a1}, S_{B,a2}, S_{B,b1}, S_{B,b2}) dazu zu betreiben, den mindestens einen fliegenden Kondensator mit einem Zeitverzug verglichen mit einem mit einer jeweiligen der Vielzahl von ersten Schaltvorrichtungen (S₁ₐ, S_{1b}, S₂ₐ, S_{2b}, S₃ₐ, S_{3b}) synchronen Betrieb zu entladen, wobei der Zeitverzug dazu konfiguriert ist:
ein Einschalten der aktiv betriebenen Schaltvorrichtung in Bezug auf einen Einschaltzeitpunkt der jeweiligen der Vielzahl von ersten Schaltvorrichtungen (S₁ₐ, S_{1b}, S₂ₐ, S_{2b}, S₃ₐ, S_{3b}) zu verzögern, und/oder
eine Einschaltdauer der aktiv betriebenen Schaltvorrichtung (S_{B,a1}, S_{B,a2}, S_{B,b1}, S_{B,b2}) verglichen mit einer Einschaltdauer der jeweiligen der Vielzahl von ersten Schaltvorrichtungen (S₁ₐ, S_{1b}, S₂ₐ, S_{2b}, S₃ₐ, S_{3b}) zu reduzieren.

2. Elektrischer Wandler nach Anspruch 1, wobei ein Strompfad, der hervorgebracht wird, wenn die mindestens eine zweite Schaltvorrichtung in einem Leitungszustand ist, frei von dissipativen elektrischen Elementen ist.

3. Elektrischer Wandler nach Anspruch 1 oder 2, wobei die mindestens eine zweite Schaltvorrichtung eine Diode (D_{B,a1}, D_{B,a2}, D_{B,b1}, D_{B,b2}) umfasst, die dazu konfiguriert ist, den mindestens einen fliegenden Kondensator parallel mit einer Gleichstrombusspannungsquelle oder dem anderen Kondensator zu verbinden.

4. Elektrischer Wandler nach einem der vorhergehenden Ansprüche, ferner umfassend mindestens eine Spannungsmessvorrichtung (57, 58), die mit der Steuerungseinheit (55) gekoppelt und dazu konfiguriert ist, eine Spannung über den mindestens einen fliegenden Kondensator und/oder eine Gleichstrombusspannungsquelle hinweg zu erfassen.

5. Elektrischer Wandler nach einem der vorhergehenden Ansprüche, wobei die Steuerungseinheit (55) dazu konfiguriert ist, einen Offsetspannungspegel (*v_{B,offset}*) zu einem Referenzspannungspegel des mindestens einen fliegenden Kondensators zu addieren, um eine Schwellenwertspannung zu erhalten, wobei die Steuerungseinheit dazu konfiguriert ist, einen Betrieb der aktiv betriebenen Schaltvorrichtung auf Basis eines Vergleichs zwischen einer Spannung des mindestens einen fliegenden Kondensators und der Schwellenwertspannung zu ermöglichen.

6. Elektrischer Wandler nach einem der vorhergehenden Ansprüche, wobei die Flying-Capacitor-Schaltung eine erste Flying-Capacitor-Zelle (402) und eine zweite Flying-Capacitor-Zelle (401) umfasst, die zwischen den ersten Knoten (X, Z) und dem Schaltknoten (sn) kaskadiert sind, wobei die Ausgleichsschaltung (43) eine erste Ausgleichsschaltung umfasst, die dazu konfiguriert ist, eine Spannung eines Kondensators (C₂ₐ, C_{2b}) der ersten Flying-Capacitor-Zelle (402) auszugleichen.

7. Elektrischer Wandler nach Anspruch 6, wobei die erste Flying-Capacitor-Zelle (402) eine Vielzahl von in Reihe verbundenen Kondensatoren (C₂ₐ, C_{2b}) umfasst und wobei die Ausgleichsschaltung (43) eine zweite Ausgleichsschaltung, die einen weiteren Induktor (L_{B,1}) umfasst, und einen zweiten Schalter (D_{B,a1}, D_{B,b1}, S_{B,a1}, S_{B,b1}) der mindestens einen zweiten Schaltvorrichtung umfasst, die dazu konfiguriert ist, einen Kondensator (C₁) der zweiten Flying-Capacitor-Zelle (401) parallel mit mindestens einem der Vielzahl von in Reihe verbundenen Kondensatoren (C₂ₐ, C_{2b}) der ersten Flying-Capacitor-Zelle (402) zu verbinden, wobei bevorzugt mindestens ein Kondensator der Vielzahl von in Reihe verbundenen Kondensatoren der ersten Flying-Capacitor-Zelle (402) und der Kondensator (C₁) der zweiten Flying-Capacitor-Zelle (401) dazu konfiguriert sind, eine gleiche Referenzspannung aufzuweisen.

8. Elektrischer Wandler nach einem der vorhergehenden Ansprüche, wobei jede der Gleichstrombusspannungsquellen dazu konfiguriert ist, eine Spannung aufzuweisen, die einer Referenzspannung des mindestens einen fliegenden Kondensators entspricht.

9. Elektrischer Wandler nach einem der vorhergehenden Ansprüche, wobei der Zwischenknoten eine Spannung aufweist, die einer Referenzspannung des mindestens einen fliegenden Kondensators entspricht.

10. Elektrischer Wandler nach Anspruch 9, wobei jede der Gleichstrombusspannungsquellen ein Gleichstrombuskondensator ist.

11. Elektrischer Wandler nach Anspruch 10, ferner umfassend einen DC/DC-Wandler (111, 112), wobei der DC/DC-Wandler dazu konfiguriert ist, eine Spannung der Vielzahl von Buskondensatoren auszugleichen, wobei bevorzugt der DC/DC-Wandler ein bidirektionaler DC/DC-Wandler ist, der bevorzugt eine Vielzahl der DC/DC-Wandler mit Ausgängen, die in Reihe zwischen den ersten Knoten verbunden sind, umfasst, wobei jeder der Vielzahl von DC/DC-Wandlern dazu konfiguriert ist, eine Spannung eines entsprechenden der Vielzahl von in Reihe verbundenen Buskondensatoren auszugleichen.

12. Elektrischer Wandler nach einem der Ansprüche 1 bis 9, wobei eine Gleichstrombusspannungsquelle einen DC/DC-Wandler, bevorzugt einen bidirektionalen DC/DC-Wandler, umfasst, wobei der DC/DC-Wandler Ausgangsanschlüsse umfasst und wobei die mindestens eine zweite Schaltvorrichtung dazu konfiguriert ist, den mindestens einen fliegenden Kondensator parallel mit den Ausgangsanschlüssen des DC/DC-Wandlers zu verbinden.

13. Verstärkersystem, umfassend einen ersten Stapel (100, 200) von elektrischen Wandlern nach einem der vorhergehenden Ansprüche, wobei die elektrischen Wandler des ersten Stapels parallel verbunden sind, wobei bevorzugt entsprechende erste Knoten (X, Z) der elektrischen Wandler des ersten Stapels mit einem gemeinsamen Gleichstrombus (11, 31) verbunden sind.

14. Verstärkersystem nach Anspruch 13, wobei die elektrischen Wandler des ersten Stapels in einem Interleaved-Modus betrieben werden.

15. Verstärkersystem nach Anspruch 13 oder 14, ferner umfassend einen zweiten Stapel von elektrischen Wandlern nach einem der Ansprüche 1 bis 12, wobei die elektrischen Wandler des zweiten Stapels parallel verbunden sind und wobei Ausgangsknoten (103) des ersten Stapels und des zweiten Stapels symmetrisch mit einer Last (101) verbunden sind.

## Revendications

1. Convertisseur électrique (50), comprenant :
deux premiers nœuds (X, Z) et un nœud de commutation (sn),
un circuit de condensateur volant comprenant au moins un condensateur volant (C₁, C₂) et une pluralité de premiers dispositifs de commutation (S₁ₐ, S_{1b}, S₂ₐ, S_{2b}, S₃ₐ, S_{3b}) servant à convertir entre un premier signal au niveau des premiers nœuds et un deuxième signal au niveau du nœud de commutation,
un circuit d'équilibrage (53, 63, 73, 83) pour équilibrer une tension de l'au moins un condensateur volant, et une pluralité de sources de tension de bus CC (C_{iXY}, C_{iYZ}, C_{iXY1}, C_{iY1Y2}, C_{iY2Z}) connectées en série entre les deux premiers nœuds (X, Z),
dans lequel le circuit d'équilibrage comprend une bobine d'induction (L_{B,1}) et au moins un deuxième dispositif de commutation (D_{B,a1}, D_{B,a2}, D_{B,b1}, D_{B,b2}, S_{B,a1}, S_{B,a2}, S_{B,b1}, S_{B,b2}) connecté à une borne de l'au moins un condensateur volant, dans lequel l'au moins un deuxième dispositif de commutation comprend un dispositif de commutation à commande active (S_{B,a1}, S_{B,a2}, S_{B,b1}, S_{B,b2}) configuré pour connecter l'au moins un condensateur volant en parallèle avec une source de tension de bus CC (C_{iXY}, C_{iYZ}, C_{iXY1}, C_{iY1Y2}, C_{iY2Z}) ou en parallèle avec un autre condensateur de l'au moins un condensateur volant pour décharger l'au moins un condensateur volant, dans lequel la bobine d'induction et l'au moins un condensateur volant sont connectés en série lorsque l'au moins un dispositif de commutation est configuré pour connecter l'au moins un condensateur volant en parallèle avec la source de tension ou l'autre condensateur, et dans lequel la bobine d'induction (L_{B,1}) est connectée à un nœud intermédiaire (Y, Y1, Y2) entre la pluralité de sources de tension de bus CC connectées en série,
**caractérisé en ce que** le convertisseur électrique comprend une unité de commande (55) configurée pour mettre en œuvre une logique de différenciation temporelle afin de faire fonctionner le dispositif de commutation à commande active (S_{B,a1}, S_{B,a2}, S_{B,b1}, S_{B,b2}) pour décharger l'au moins un condensateur volant avec un retard temporel par rapport au fonctionnement synchrone avec un dispositif respectif de la pluralité de premiers dispositifs de commutation (S₁ₐ, S_{1b}, S₂ₐ, S_{2b}, S₃ₐ, S_{3b}), dans lequel le retard temporel est configuré pour :
retarder une mise en marche du dispositif de commutation à commande active par rapport à un instant de mise en marche du dispositif respectif de la pluralité de premiers dispositifs de commutation (S₁ₐ, S_{1b}, S₂ₐ, S_{2b}, S₃ₐ, S_{3b}), et/ou
réduire un temps de marche du dispositif de commutation à commande active (S_{B,a1}, S_{B,a2}, S_{B,b1}, S_{B,b2}) par rapport à un temps de marche du dispositif respectif de la pluralité de premiers dispositifs de commutation (S₁ₐ, S_{1b}, S₂ₐ, S_{2b}, S₃ₐ, S_{3b}).

2. Convertisseur électrique selon la revendication 1, dans lequel un trajet de courant créé lorsque l'au moins un deuxième dispositif de commutation est dans un état de conduction est dépourvu d'éléments électriques dissipatifs.

3. Convertisseur électrique selon la revendication 1 ou 2, dans lequel l'au moins un deuxième dispositif de commutation comprend une diode (D_{B,a1}, D_{B,a2}, D_{B,b1}, D_{B,b2}) configurée pour connecter l'au moins un condensateur volant en parallèle avec une source de tension de bus CC ou l'autre condensateur.

4. Convertisseur électrique selon l'une quelconque des revendications précédentes, comprenant en outre au moins un dispositif de mesure de tension (57, 58) couplé à l'unité de commande (55) et configuré pour détecter une tension aux bornes de l'au moins un condensateur volant et/ou à une source de tension de bus CC.

5. Convertisseur électrique selon l'une quelconque des revendications précédentes, dans lequel l'unité de commande (55) est configurée pour ajouter un niveau de tension de décalage (*v*_{*B,*offset}) à un niveau de tension de référence de l'au moins un condensateur volant pour obtenir une tension seuil, dans lequel l'unité de commande est configurée pour permettre le fonctionnement du dispositif de commutation à commande active sur la base d'une comparaison entre une tension de l'au moins un condensateur volant et la tension seuil.

6. Convertisseur électrique selon l'une quelconque des revendications précédentes, dans lequel le circuit de condensateur volant comprend une première cellule de condensateur volant (402) et une deuxième cellule de condensateur volant (401) en cascade entre les premiers nœuds (X, Z) et le nœud de commutation (sn), dans lequel le circuit d'équilibrage (43) comprend un premier circuit d'équilibrage configuré pour équilibrer une tension d'un condensateur (C₂ₐ, C_{2b}) de la première cellule de condensateur volant (402).

7. Convertisseur électrique selon la revendication 6, dans lequel la première cellule de condensateur volant (402) comprend une pluralité de condensateurs connectés en série (C₂ₐ, C_{2b}), et dans lequel le circuit d'équilibrage (43) comprend un deuxième circuit d'équilibrage comprenant une autre bobine d'induction (L_{B,1}) et un deuxième commutateur (D_{B,a1}, D_{B,b1}, S_{B,a1}, S_{B,b1}) de l'au moins un deuxième dispositif de commutation configuré pour connecter un condensateur (C₁) de la deuxième cellule de condensateur volant (401) en parallèle avec au moins l'un de la pluralité de condensateurs connectés en série (C₂ₐ, C_{2b}) de la première cellule de condensateur volant (402), de préférence dans lequel au moins un condensateur de la pluralité de condensateurs connectés en série de la première cellule de condensateur volant (402) et le condensateur (C₁) de la deuxième cellule de condensateur volant (401) sont configurés pour avoir une même tension de référence.

8. Convertisseur électrique selon l'une quelconque des revendications précédentes, dans lequel chacune des sources de tension de bus CC est configurée pour avoir une tension correspondant à une tension de référence de l'au moins un condensateur volant.

9. Convertisseur électrique selon l'une quelconque des revendications précédentes, dans lequel le nœud intermédiaire a une tension correspondant à une tension de référence de l'au moins un condensateur volant.

10. Convertisseur électrique selon la revendication 9, dans lequel chacune des sources de tension de bus CC est un condensateur de bus CC.

11. Convertisseur électrique selon la revendication 10, comprenant en outre un convertisseur CC/CC (111, 112), dans lequel le convertisseur CC/CC est configuré pour équilibrer une tension de la pluralité de condensateurs de bus, de préférence dans lequel le convertisseur CC/CC est un convertisseur CC/CC bidirectionnel, comprenant de préférence une pluralité des convertisseurs CC/CC ayant des sorties connectées en série entre les premiers nœuds, chacun de la pluralité de convertisseurs CC/CC étant configuré pour équilibrer une tension d'un condensateur correspondant de la pluralité de condensateurs de bus connectés en série.

12. Convertisseur électrique selon l'une quelconque des revendications 1 à 9, dans lequel une source de tension de bus CC comprend un convertisseur CC/CC, de préférence un convertisseur CC/CC bidirectionnel, dans lequel le convertisseur CC/CC comprend des bornes de sortie et dans lequel l'au moins un deuxième dispositif de commutation est configuré pour connecter l'au moins un condensateur volant en parallèle avec les bornes de sortie du convertisseur CC/CC.

13. Système amplificateur, comprenant un premier empilement (100, 200) de convertisseurs électriques selon l'une quelconque des revendications précédentes, dans lequel les convertisseurs électriques du premier empilement sont connectés en parallèle, de préférence dans lequel des premiers nœuds (X, Z) correspondants des convertisseurs électriques du premier empilement sont connectés à un bus CC commun (11, 31).

14. Système amplificateur selon la revendication 13, dans lequel les convertisseurs électriques du premier empilement sont mis en fonctionnement en mode entrelacé.

15. Système amplificateur selon la revendication 13 ou 14, comprenant en outre un deuxième empilement de convertisseurs électriques selon l'une quelconque des revendications 1 à 12, dans lequel les convertisseurs électriques du deuxième empilement sont connectés en parallèle, et dans lequel des nœuds de sortie (103) du premier empilement et du deuxième empilement sont connectés symétriquement à une charge (101).
